(19) **Europäisches Patentamt / European Patent Office / Office européen des brevets**

(11) **EP 2 802 935 B1**

(12) **EUROPÄISCHE PATENTSCHRIFT**

(45) Veröffentlichungstag und Bekanntmachung des Hinweises auf die Patenterteilung:
**19.04.2023   Patentblatt 2023/16**

(21) Anmeldenummer: **13702733.0**

(22) Anmeldetag: **11.01.2013**

(51) Internationale Patentklassifikation (IPC):
**G02C 7/02** *(2006.01)*

(52) Gemeinsame Patentklassifikation (CPC):
**G02C 7/027; G02C 7/028**

(86) Internationale Anmeldenummer:
**PCT/EP2013/000073**

(87) Internationale Veröffentlichungsnummer:
**WO 2013/104548 (18.07.2013 Gazette 2013/29)**

(54) **BRILLENGLASOPTIMIERUNG MIT INDIVIDUELLEM AUGENMODELL**

EYEGLASS OPTIMIZATION USING AN INDIVIDUAL EYE MODEL

OPTIMISATION DE VERRES DE LUNETTES AU MOYEN D'UN MODÈLE D' IL INDIVIDUEL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.01.2012   DE 102012000390**

(43) Veröffentlichungstag der Anmeldung:
**19.11.2014   Patentblatt 2014/47**

(73) Patentinhaber: **Rodenstock GmbH
80687 München (DE)**

(72) Erfinder:
 • **ALTHEIMER, Helmut
  87650 Baisweil-Lauchdorf (DE)**
 • **BECKEN, Wolfgang
  81379 München (DE)**
 • **ESSER, Gregor
  81735 München (DE)**
 • **SEIDEMANN, Anne
  81375 München (DE)**
 • **MÜLLER, Werner
  75443 Ötisheim (DE)**

(74) Vertreter: **Müller-Boré & Partner
Patentanwälte PartG mbB
Friedenheimer Brücke 21
80639 München (DE)**

(56) Entgegenhaltungen:
WO-A1-02/088830     WO-A1-2008/089999
WO-A2-02/084381     US-A1- 2003 107 706

 • LIOU L H ET AL: "Anatomically accurate, finite model eye for optical modeling", JOURNAL OF THE OPTICAL SOCIETY OF AMERI, OPTICAL SOCIETY OF AMERICA, US, vol. 14, no. 8, 1 August 1997 (1997-08-01) , pages 1684-1695, XP008082210, ISSN: 1084-7529
 • DAVID A ATCHISON ET AL: "Optical models of the human eye : Optical models of the human eye Atchison and Thibos", CLINICAL AND EXPERIMENTAL OPTOMETRY, vol. 99, no. 2, 1 March 2016 (2016-03-01), pages 99-106, XP055532088, AU ISSN: 0816-4622, DOI: 10.1111/cxo.12352

**Beschreibung**

Die vorliegende Erfindung betrifft ein Verfahren, eine Vorrichtung und ein entsprechendes Computerprogrammerzeugnis zur Berechnung (Optimierung) und Herstellung eines Brillenglases unter Berücksichtigung von Abbildungsfehlern höherer Ordnung sowohl des Auges als auch des Brillenglases.

Für die Herstellung bzw. Optimierung von Brillengläsern, insbesondere von individuellen Brillengläsern wird jedes Brillenglas so gefertigt, dass für jede gewünschte Blickrichtung oder jeden gewünschten Objektpunkt eine möglichst gute Korrektur eines Refraktionsfehlers des jeweiligen Auges des Brillenträgers erreicht wird. Im Allgemeinen gilt ein Brillenglas für eine gegebene Blickrichtung dann als vollkorrigierend, wenn die Werte für Sphäre, Zylinder und Achse der Wellenfront beim Passieren der Scheitelpunktkugel mit den Werten für Sphäre, Zylinder und Achse der Verordnung für das fehlsichtige Auge übereinstimmen. Bei der Refraktionsbestimmung für ein Auge eines Brillenträgers werden dioptrische Werte (insbesondere Sphäre, Zylinder, Achslage - also insbesondere sphäro-zylindrische Abweichungen) für eine weite (in der Regel unendliche) Entfernung und gegebenenfalls (für Mehrstärkengläser bzw. Gleitsichtgläser) eine Addition für eine nahe Entfernung (z.B. nach DIN 58208) bestimmt. Bei modernen Brillengläsern können zusätzlich auch von der Norm abweichende Objektentfernungen, die bei der Refraktionsbestimmung verwendet wurden, angegeben werden. Damit ist die Verordnung (insbesondere Sphäre, Zylinder, Achslage und gegebenenfalls Addition) festgelegt, die an einen Brillenglashersteller übermittelt wird. Kenntnisse über eine spezielle bzw. individuelle Anatomie des jeweiligen Auges oder die tatsächlich im Einzelfall vorliegenden Brechwerte des fehlsichtigen Auges sind dafür nicht erforderlich.

Eine vollständige Korrektur für alle Blickrichtungen gleichzeitig ist aber im Normalfall nicht möglich. Daher werden die Brillengläser derart gefertigt, dass sie vor allem in den hauptsächlichen Nutzungsbereichen, insbesondere in den zentralen Durchblicksbereichen eine gute Korrektur von Fehlsichtigkeiten des Auges und nur geringe Abbildungsfehler bewirken, während in peripheren Bereichen größere Abbildungsfehler zugelassen werden.

Um ein Brillenglas derart fertigen zu können, erfolgt zunächst eine Berechnung der Brillenglasflächen bzw. zumindest einer der Brillenglasflächen derart, dass dadurch die gewünschte Verteilung der unvermeidlichen Abbildungsfehler bewirkt wird. Diese Berechnung und Optimierung erfolgt üblicherweise mittels eines iterativen Variationsverfahrens durch Minimieren einer Zielfunktion. Als Zielfunktion wird insbesondere eine Funktion F mit folgendem funktionalen Zusammenhang zur sphärischen Wirkung S, zum Betrag der zylindrischen Wirkung Z und zur Achslage des Zylinders $\alpha$ (auch als "SZA"-Kombination bezeichnet) berücksichtigt und minimiert:

$$F = \sum_{i=1}^{m} \left[ g_{i,S\Delta} \left( S_{\Delta,i} - S_{\Delta,i,Soll} \right)^2 + g_{i,Z\Delta} \left( Z_{\Delta,i} - Z_{\Delta,i,Soll} \right)^2 + ... \right]$$

Dabei werden in der Zielfunktion F an den Bewertungsstellen i des Brillenglases zumindest die tatsächlichen Refraktionsdefizite der sphärischen Wirkung $S_{\Delta,i}$ und der zylindrischen Wirkung $Z_{\Delta,i}$ sowie Sollvorgaben für die Refraktionsdefizite der sphärischen Wirkung $S_{\Delta,i,Soll}$ und der zylindrischen Wirkung $Z_{\Delta,i,Soll}$ berücksichtigt.

Bereits in DE 103 13 275 wurde erkannt, dass es vorteilhaft ist, die Sollvorgaben nicht als absolute Werte der zu optimierenden Eigenschaften sondern als deren Abweichungen von der Verordnung, also als geforderte lokale Fehlanpassung anzugeben. Dies hat den Vorteil, dass die Sollvorgaben unabhängig von der Verordnung ( $Sph_V, Zyl_V, Achse_V, Pr_V, B_V$) sind und die Sollvorgaben nicht für jede individuelle Verordnung geändert werden müssen. Als "Ist"-Werte der zu optimierenden Eigenschaften fließen in die Zielfunktion somit auch nicht absolute Werte diese optischen Eigenschaften, sondern die Abweichungen von der Verordnung ein. Dies hat den Vorteil, dass die Sollvorgaben unabhängig von der Verordnung vorgegeben werden können und nicht für jede individuelle Verordnung geändert werden müssen.

Die jeweiligen Refraktionsdefizite an den jeweiligen Bewertungsstellen werden vorzugsweise mit Gewichtungsfaktoren $g_{i,S\Delta}$ bzw. $g_{i,Z\Delta}$ berücksichtigt. Dabei bilden die Sollvorgaben für die Refraktionsdefizite der sphärischen Wirkung $S_{\Delta,i,Soll}$ und/oder der zylindrischen Wirkung $Z_{\Delta,i,Soll}$ insbesondere zusammen mit den Gewichtungsfaktoren $g_{i,S\Delta}$ bzw. $g_{i,Z\Delta}$ das sogenannte Brillenglasdesign. Darüber hinaus können insbesondere auch weitere Residuen, insbesondere weitere zu optimierende Größen, wie z.B. Koma und/oder sphärische Aberration und/oder Prisma und/oder Vergrößerung und/oder anamorphotische Verzerrung, usw., berücksichtigt werden, was insbesondere durch den Ausdruck "+..." in der oben genannten Formel für die Zielfunktion F angedeutet ist.

In manchen Fällen kann es zu einer deutlichen Verbesserung insbesondere einer individuellen Anpassung eines Brillenglases beitragen, wenn bei der Optimierung des Brillenglases nicht nur Abbildungsfehler bis zur zweiten Ordnung (Sphäre, Betrag des Astigmatismus und Achslage), sondern auch höherer Ordnung (z.B. Koma, Dreiblattfehler, sphärische Aberration) berücksichtigt werden.

Es ist aus dem Stand der Technik bekannt, für optische Elemente und insbesondere für Brillengläser, die durch mindestens zwei brechende, refraktive Grenzflächen begrenzt sind, die Form einer Wellenfront zu bestimmen. Dies kann beispielsweise durch numerische Berechnung einer ausreichenden Anzahl an Nachbarstrahlen erfolgen, verbunden mit einem anschließenden Fit der Wellenfront durch Zernike-Polynome. Ein anderer Ansatz beruht auf einer lokalen Wellenfrontdurchrechnung bei der Refraktion (siehe WO 2008/089999 A1). Hierbei wird pro Durchblickpunkt nur ein einziger Strahl berechnet (der Hauptstrahl) und begleitend die Ableitungen der Pfeilhöhen der Wellenfront nach den transversalen (zum Hauptstrahl senkrechten) Koordinaten. Diese Ableitungen können bis zu einer bestimmten Ordnung gebildet werden, wobei die zweiten Ableitungen die lokalen Krümmungseigenschaften der Wellenfront (wie z.B. Brechwert, Astigmatismus) beschreiben und die höheren Ableitungen mit den Abbildungsfehlern höherer Ordnung zusammenhängen.

Bei einer Durchrechnung von Licht durch ein Brillenglas werden die lokalen Ableitungen der Wellenfronten an einer geeigneten Position im Strahlverlauf berechnet, um sie dort mit erwünschten Werten, die aus der Refraktion des Brillenglasträgers hervorgehen, zu vergleichen. Als solche Position, an der eine Auswertung der Wellenfronten stattfindet, wird in der Regel die Scheitelpunktkugel oder beispielsweise die Hauptebene des Auges bei der entsprechenden Blickrichtung herangezogen. Dabei wird angenommen, dass eine sphärische Wellenfront vom Objektpunkt ausgeht und bis zur ersten Brillenglasfläche propagiert. Dort wird die Wellenfront gebrochen und propagiert anschließend zur zweiten Brillenglasfläche, wo sie wieder gebrochen wird. Die letzte Propagation findet dann von der zweiten Grenzfläche bis zur Scheitelpunktkugel (oder der Hauptebene des Auges) statt, wo die Wellenfront mit vorgegebenen Werten für die Korrektion der Refraktion des Auges des Brillenträgers verglichen wird.

Um diesen Vergleich auf Basis der ermittelten Refraktionsdaten des jeweiligen Auges durchzuführen, wird der Auswertung der Wellenfront an der Scheitelpunktkugel ein etabliertes Modell des fehlsichtigen Auges unterstellt, in welchem einem rechtsichtigen Grundauge eine Fehlsichtigkeit (Refraktionsdefizit) überlagert wird. Dies hat sich besonders bewährt, da hierfür weitergehende Kenntnisse über die Anatomie bzw. Optik des jeweiligen Auges (z.B. Verteilung der Brechwerte, Augenlänge, Längenametropie und/oder Brechwertametropie) nicht erforderlich sind. Ausführliche Beschreibungen dieses Modells aus Brillenglas und Refraktionsdefizit sind beispielsweise in Dr. Roland Enders "Die Optik des Auges und der Sehhilfen", Optische Fachveröffentlichung GmbH, Heidelberg, 1995, Seiten 25 ff. und in Diepes, Blendowske "Optik und Technik der Brille", Optische Fachveröffentlichung GmbH, Heidelberg, 2002, Seiten 47 ff. enthalten. Als bewährtes Modell wird insbesondere das darin beschriebene Korrektionsmodell nach REINER verwendet.

Dabei wird als Refraktionsdefizit der Mangel oder der Überschuss an Brechwert des optischen Systems des fehlsichtigen Auges im Vergleich zu einem gleich langen rechtsichtigen Auge (Restauge) angesehen. Der Brechwert des Refraktionsdefizits ist insbesondere annähernd gleich der Fernpunktrefraktion mit negativem Vorzeichen. Für eine vollständige Korrektur der Fehlsichtigkeit bilden das Brillenglas und das Refraktionsdefizit zusammen ein Fernrohrsystem (afokales System). Das Restauge (fehlsichtiges Auge ohne eingefügtes Refraktionsdefizit) wird als rechtsichtig angenommen. Ein Brillenglas gilt damit als vollkorrigierend für die Ferne, wenn sein bildseitiger Brennpunkt mit dem Fernpunkt des fehlsichtigen Auges und damit auch mit dem objektseitigen Brennpunkt des Refraktionsdefizits zusammenfällt.

US 2003/0107706 A1 beschreibt die Verwendung eines Augenmodells zur Berechnung und Optimierung von ophthalmischen Linsen mittels Wellenfrontdurchrechnung. Dabei wird die Wellenfront nach Durchlaufen der zu berechnenden ophthalmischen Linse und des Augenmodells auf der Retina des Augenmodells ausgewertet. Das hierfür genutzte Augenmodell beschreibt dabei die Brechung der Wellenfront an der Hornhaut durch einen Übergang von einem Brechungsindex in der Umgebung zu einem Brechungsindex des Augeninneren und die Position und Form der Retina. Außerdem wird in diesem Augenmodell zusätzlich eine Blende berücksichtigt, die die Wirkung der Pupille nachbildet.

Aufgabe der Erfindung ist es, ein verbessertes Verfahren zum Berechnen oder Optimieren eines Brillenglases, vorzugsweise eines progressiven Brillenglases, anzugeben, wobei das Brillenglas besser an die individuellen Anforderungen des Brillenträgers angepasst ist. Diese Aufgabe wird durch ein computerimplementiertes Verfahren, eine Vorrichtung, ein Computerprogrammerzeugnis und ein Speichermedium mit den in den unabhängigen Ansprüchen angegebenen Merkmalen gelöst. Bevorzugte Ausführungsformen sind Gegenstand der abhängigen Ansprüche.

Gemäß einem ersten Aspekt bietet die Erfindung somit ein computerimplementiertes Verfahren zum Berechnen oder Optimieren eines Brillenglases für zumindest ein Auge eines Brillenträgers gemäß Anspruch 1.

Dazu werden zunächst Refraktionsdaten des zumindest einen Auges des Brillenträgers erfasst. Die Refraktionsdaten umfassen dabei zumindest die sphärische und astigmatische Fehlsichtigkeit des Auges. In einer bevorzugten Ausführungsform beschreiben die erfassten Refraktionsdaten auch Abbildungsfehler höherer Ordnung (HOA). Vorzugsweise werden die Refraktionsdaten (auch aberrometrische Daten genannt) beispielsweise vom Augenoptiker mittels eines Aberrometers gemessen (objektive Refraktionsdaten). Alternativ oder zusätzlich kann auch eine subjektiv bestimmte Refraktion herangezogen werden. Die Refraktionsdaten werden anschließend vorzugsweise an einen Brillenglashersteller übermittelt und/oder einem Berechnungs- bzw. Optimierungsprogramm zur Verfügung gestellt. Sie stehen damit zur Verfügung, um für das erfindungsgemäße Verfahren erfasst, insbesondere in digitaler Form ausgelesen und/oder empfangen zu werden. Dieser Schritt kann insbesondere in gleicher Weise durchgeführt werden wie in herkömmlichen Berechnungs- bzw. Optimierungsverfahren für Brillengläser.

Von den herkömmlichen Verfahren abweichend umfasst das erfindungsgemäße Verfahren nun aber einen Schritt des Festlegens eines individuellen Augenmodells, welches zumindest gewisse Vorgaben über geometrische und optische Eigenschaften des Auges festlegt. So werden in dem erfindungsgemäßen individuellen Augenmodell zumindest die Topographie einer Hornhautvorderfläche des zumindest einen Auges, eine Länge des Auges (hier auch als Abbildungslänge $L_A$ bezeichnet), welche eine Position der Retina des Auges beschreibt, und eine Position und Wirkung einer Linse des Auges in bestimmter Weise, nämlich derart festlegt, dass das vom Augenmodell beschriebene Auge die erfassten Refraktionsdaten aufweist. So wird im einfachsten Fall eines Augenmodells die Refraktion des Auges durch das optische System bestehend aus der Hornhautvorderfläche, der Augenlinse und der Netzhaut bestimmt. In diesem einfachen Modell legen die Lichtbrechung an der Hornhautvorderfläche und die Brechkraft der Augenlinse (vorzugsweise einschließlich der sphärischen und astigmatischen Aberrationen und Aberrationen höherer Ordnung) zusammen mit deren Positionierung relativ zur Netzhaut, welche vorzugsweise durch die Augenlänge festgelegt werden/wird, die Refraktion des Auges fest. Vorzugsweise wird dabei die Topographie der Hornhautvorderfläche individuell gemessen und die Augenlinse des individuellen Augenmodells entsprechend berechnet, um die individuell bestimmten Refraktionsdaten zu erfüllen.

Für die Berechnung bzw. Optimierung des Brillenglases werden eine erste Fläche und eine zweite Fläche des Brillenglases insbesondere als Startflächen vorgegeben. In einer bevorzugten Ausführungsform wird nur eine der beiden Flächen optimiert. Vorzugsweise handelt es sich hierbei um die Rückfläche des Brillenglases.

Vorzugsweise wird dabei sowohl für die Vorderfläche als auch für die Rückfläche des Brillenglases eine entsprechende Startfläche vorgegeben. In einer bevorzugten Ausführungsform wird während des Optimierungsverfahrens aber nur eine Fläche iterativ verändert bzw. optimiert. Die andere Fläche des Brillenglases kann zum Beispiel eine einfache sphärische oder rotationssymmetrische asphärische Fläche sein. Allerdings ist es auch möglich, beide Flächen zu optimieren.

Ausgehend von den beiden vorgegebenen Flächen umfasst das Verfahren ein Ermitteln des Verlaufs eines Hauptstrahls durch zumindest einen Durchblickspunkt (*i*) zumindest einer zu berechnenden oder optimierenden Fläche des Brillenglases. Der Hauptstrahl beschreibt den geometrischen Strahlverlauf ausgehend von einem Objektpunkt durch die beiden Brillenglasflächen, die Hornhautvorderfläche und die Linse des Auges vorzugsweise bis zur Netzhaut des Auges.

Außerdem umfasst das Verfahren ein Vorgeben einer auf die erste Fläche (Vorderfläche) des Brillenglases entlang des Hauptstrahls auftreffenden sphärischen Wellenfront ($w_0$). Diese sphärische Wellenfront beschreibt das von einem Objektpunkt ausgehende Licht. Die Krümmung der sphärischen Wellenfront beim Auftreffen auf die erste Fläche des Brillenglases entspricht dem Kehrwert des Objektabstandes. Das erfindungsgemäße Verfahren umfasst ein Vorgeben eines Objektabstandesmodells, welches jeder Blickrichtung oder jedem Durchblickspunkt der zumindest einen zu optimierenden Fläche des Brillenglases eine Objektentfernung zuordnet. Damit wird die individuelle Gebrauchssituation, in der das herzustellende Brillenglas zum Einsatz kommen soll, beschrieben.

Die auf das Brillenglas auftreffende Wellenfront wird nun an der Vorderfläche des Brillenglases vorzugsweise zum ersten Mal gebrochen. Anschießend propagiert die Wellenfront entlang des Hauptstrahls innerhalb des Brillenglases von der Vorderfläche zur Rückfläche, wo sie zum zweiten Mal gebrochen wird. Die durch das Brillenglas transmittierte Wellenfront propagiert nun entlang des Hauptstrahls bis zur Hornhautvorderfläche des Brillenglases, wo sie wiederum gebrochen wird. Nach einer weiteren Propagation der Wellenfront innerhalb des Auges bis zur Augenlinse wird sie auch dort wiederum gebrochen, um schließlich bis zur Netzhaut des Auges zu propagieren. Je nach optischen Eigenschaften der einzelnen optischen Elemente (Brillenglasflächen, Hornhautvorderfläche, Augenlinse) führt jeder Brechungsvorgang auch zu einer Deformation der Wellenfront.

Um eine exakte Abbildung des Objektpunktes auf einen Bildpunkt auf der Netzhaut zu erreichen, müsste die Wellenfront die Augenlinse vorzugsweise als konvergierende sphärische Wellenfront verlassen, deren Krümmung genau dem Kehrwert des Abstandes zur Netzhaut entspricht. Wie allerdings bereits eingangs erwähnt, ist eine vollständige Korrektion der Refraktion des Auges gleichzeitig für alle Blickrichtungen des Auges, also für alle Durchblickspunkte der zumindest einen zu optimierenden Brillenglasfläche, im Allgemeinen nicht möglich. Je nach Blickrichtung wird somit vorzugsweise eine absichtliche Fehlanpassung des Brillenglases vorgegeben, welche je nach Anwendungssituation insbesondere in den hauptsächlich genutzten Bereichen des Brillenglases (z.B. zentrale Durchblickspunkte) gering, in den wenig genutzten Bereichen (z.B. periphere Durchblickspunkte) etwas höher sind. Diese Vorgehensweise ist dem Prinzip nach aus herkömmlichen Optimierungsverfahren bereits bekannt. Anders als in herkömmlichen Verfahren schlägt die Erfindung jedoch vor, die Auswertung der Wellenfront nicht an einer Position zwischen dem Brillenglas und dem Auge, z.B. an der Scheitelpunktkugel, vorzunehmen, sondern auf Basis des individuell festgelegten Augenmodells eine weiter gehende Berechnung der Wellenfront bis hinter der Augenlinse vorzunehmen, um dort eine Auswertung der resultierenden Wellenfront vorzunehmen.

In einer bevorzugten Ausführungsform erfolgt die Auswertung der Wellenfront an der Rückfläche der Augenlinse. Dies ist besonders dann vorteilhaft, wenn das verwendete individuelle Augenmodell die Augenlinse unter anderem mittels derer Flächen (Vorder- und/oder Rückfläche) beschreibt. In einer anderen bevorzugten Ausführungsform erfolgt die Auswertung an der bildseitigen Hauptebene der Augenlinse. Dies ist insbesondere dann besonders vorteilhaft, wenn das verwendete individuelle Augenmodell die Augenlinse mittels Hauptebenen beschreibt. Es sind aber auch andere Positionen insbesondere zwischen den Augenlinse und der Netzhaut im Augenmodell möglich, um dort die Auswertung der resultierenden Wellenfront vorzunehmen. Dazu werden vorzugsweise an der entsprechenden Position im Strahlverlauf die lokalen Ableitungen der resultierenden Wellenfront berechnet, um sie dort mit erwünschten Werten einer vorgegebenen Sollaberration (Fehlanpassung) zur vergleichen. Die Verteilung der Sollaberrationen über die einzelnen Durchblickspunkte der zu optimierenden Fläche des Brillenglases zusammen mit eventuellen Gewichtungen stellt analog zu bekannten Verfahren das "Design" des Brillenglases dar.

Um das Brillenglas zu optimieren, wird nun die zumindest eine zu berechnende oder optimierende Fläche des Brillenglases solange iterativ variiert, bis eine Aberration der resultierenden Wellenfront einer vorgegebenen Sollaberration entspricht, also insbesondere um vorgegebene Werte der Aberration von einer sphärischen Wellenfront, deren Krümmungsmittelpunkt auf der Netzhaut liegt, abweicht. Diese sphärische Wellenfront wird hier auch als Referenzwellenfront bezeichnet. Vorzugsweise umfasst das Verfahren dazu ein Minimieren einer Zielfunktion F, insbesondere analog zu der eingangs bereits beschriebenen Zielfunktion. Weitere bevorzugte Zielfunktionen, insbesondere bei Berücksichtigung von Abbildungsfehlern höherer Ordnung sind auch weiter unten noch beschrieben.

Die Durchrechnung der Wellenfront (WF) bis in das individuell modellierte Auge hinein, insbesondere bis hinter die Augenlinse bietet eine unerwartet effiziente Verbesserung der Präzision in der Anpassung von Brillengläsern. So zeigte sich, dass, anders als dies bisher immer angenommen wurde, die Ebene bzw. Fläche der Auswertung (z.B. Scheitelpunktkugel) in herkömmlichen Berechungsmethoden eine große Rolle spielt. Auch das Ergebnis des Vergleichs zwischen Gebrauchswerten und Sollwerten hängt bezüglich der Anpassungsgenauigkeit eines Brillenglases stärker von dieser Fläche ab als dies in herkömmlichen Optimierungsverfahren unterstellt wurde. Durch die individuelle Modellierung des Auges und die vollständige Berechung des Wellenfront bis in das individuell modellierte Auge hinein, umgeht die vorliegende Erfindung dieses Problem der Wahl einer geeigneten Fläche zur Auswertung der Wellenfront vor dem Auge. Dabei stellte sich insbesondere heraus, dass die konkrete Wahl der Position/Fläche zur Auswertung der Wellenfronten innerhalb des Auges, insbesondere hinter der individuell modellierten Augenlinse wesentlich weniger kritisch auf die Anpassung des Brillenglases ist als dies für herkömmliche Auswertungen vor einem Standardauge mit einer vorgeschalteten Fehlsichtigkeit ist. Bei Anwendung der vorliegenden Erfindung ist man somit nicht mehr auf eine Diskussion zur Wahl einer günstigsten Fläche/Ebene zur Auswertung von Wellenfronten angewiesen.

Vorzugsweise umfasst das Ermitteln eines individuellen Augenmodells ein Erfassen individueller topographischer Daten der Hornhautvorderfläche und/oder einer individuellen Retina-Position $L_A$ bzw. eine Länge des zumindest einen Auges. Basierend darauf umfasst das Ermitteln eines individuellen Augenmodells vorzugsweise Ermitteln (insbesondere Berechnen) der Wirkung der Linse des Auges (Augenlinse) derart, dass das Auge im Augenmodell eine Refraktion gemäß den erfassten Refraktionsdaten des Brillenträgers aufweist. Es ist in diesem Fall also nicht notwenig, die optische Wirkung (insbesondere die Brechkraft) des Auges individuell und separat zu messen. Vielmehr wird vorzugsweise davon ausgegangen, dass die in der Refraktionsmessung bestimmte Aberration des Auges durch die Kombination aus der Topographie der Hornhautvorderfläche, die optische Wirkung der Augenlinse sowie deren relative Position zueinander und deren Position relativ zur Retina bestimmt wird. Sobald man also die Topographie der Hornhautvorderfläche, deren Lage relativ zur Augenlinse und den Abstand der Retina vorgibt, lassen sich aus der Refraktionsmessung die optischen Brechungseigenschaften, insbesondere einschließlich der Aberrationen höherer Ordnung ermitteln. Je nach Ausführungsform ist es dabei möglich, die geometrischen Größen des Auges, insbesondere die relativen Positionen (Abstand) der Hornhaut und der Augenlinse sowie die Augenlänge bzw. die Position der Retina relativ zur Augenlinse und/oder relativ zur Hornhautvorderfläche, individuell zu messen oder dafür Standardwerte vorzugeben, die bei der Erstellung des individuellen Augenmodells vorgegeben werden. In einer bevorzugten Ausführungsform werden für die geometrischen Größen feste Standardwerte vorgegeben, die für alle Augenmodelle gleichermaßen verwendet werden. In diesem Fall erfolgt die Individualisierung des Augenmodells vorzugsweise durch die individuelle Messung der Refraktion und/oder der Hornhauttopographie.

In einer anderen bevorzugten Ausführungsform wird ein funktionaler Zusammenhang zwischen einer Refraktion des Auges - insbesondere einer sphärischen Verordnung - und einer Augenlänge vorgegeben. Ein solcher funktionaler Zusammenhang kann auf Erfahrungswerten im Mittel vieler Brillenträger basieren, wonach hyperope Augen regelmäßig eine andere Länge aufweisen als myope Augen. In diesem Fall umfasst das Ermitteln des individuellen Augenmodells vorzugsweise ein individuelles Ermitteln einer Augenlänge bzw. einer Position $L_A$ der Retina relativ zur Augenlinse oder relativ zur Hornhautvorderfläche aus dem allgemeinen, vorgegebenen funktionalen Zusammenhang und der individuellen Refraktion des Auges.

In einer weiteren bevorzugten Ausführungsform werden die geometrischen Größen des Auges, insbesondere die Augenlänge und/oder die Abstände zwischen Hornhaut und Augenlinse bzw. zwischen Augenlinse und Retina individuell gemessen. Entsprechendes gilt für weitere geometrische Größen, wie z.B. die Dicke der Hornhaut, die Topographie der Hornhautrückfläche oder die Topographie der einzelnen Linsenflächen, sowie für optische Parameter, wie z.B. die Brechungsindizes der einzelnen Elemente im Auge. Sie können entweder individuell gemessen oder als Standardwerte vorgegeben werden.

Besonders bevorzugt wird das Augenmodell mit drei refraktiven Flächen festgelegt, welche insbesondere die Hornhautvorderfläche (Cornea C), eine Linsenvorderfläche ($L_1$) und eine Linsenrückfläche ($L_2$) der Linse des Auges umfassen. Insbesondere kann dabei ein Augenmodell nach Gullstrand-Emsley oder nach Bennett und Rabetts zugrunde gelegt werden, wobei die Parameter der brechenden Flächen individuell ermittelt bzw. festgelegt werden. Die Berücksichtigung von genau drei brechenden Flächen stellte sich als besonders leistungsfähig heraus. Damit erhält das Augenmodell eine sehr gute individuelle Anpassbarkeit, bei gleichzeitiger Wahrung eines ausreichend geringen Berechnungs-/Modellierungsaufwands. So wurde insbesondere erkannt, daß beispielsweise die gesonderte Betrachtung der Brechung an der Cornea-Rückfläche wegen der geringen Cornea-Dicke eine so geringe Rolle spielt, dass sie vernachlässigt werden kann und dennoch eine wesentlichen Verbesserung gegenüber herkömmlichen Berechnungs- und Optimierungsverfahren erreicht wird.

Da die letzte Propagation in einer Wellenfront-Durchrechnung, nämlich die Propagation vom Scheitel der Rückfläche $L_2$ der Augenlinse bis zur Retina, nur unter wellentheoretischen Aspekten interessant ist, ist die hinterste unter geometrisch-optischen Aspekten relevante Position $L_2$. Bis hierhin (oder alternativ bis zur Austrittspupille AP des Auges) wird eine geometrisch-optische WF-Durchrechnung durchgeführt, um die maximal mögliche Aussagekraft zu besitzen.

Ein wesentlicher Fortschritt einer solchen WF-Durchrechnung gegenüber einer Scheitelpunktkugelbetrachtung besteht darin, dass die WF-Durchrechnung durch das Auge im tatsächlichen Gebrauchsstrahlengang stattfindet. Die Messdaten einer Aberrometermessung, die einem Soll-Ist-Vergleich an der Scheitelpunktkugel zugrundeliegen, entstammen stattdessen ja einem Messstrahlengang, der von der späteren Sehsituation u.U. stark abweichen kann. Dasselbe gilt auch für den Strahlengang, in dem die Ergebnisse einer subjektiven Refraktion gewonnen werden.

Aus diesem Grund kann sich natürlich der Soll-Ist-Vergleich bei einer vollen WF-Durchrechnung durch das Auge vom Soll-Ist-Vergleich bei einer Berechnung an der Scheitelpunktkugel nur in dem Maße unterscheiden, wie sich auch der Gebrauchsstrahlengang vom Messstrahlengang unterscheidet. Diese Unterschiede in den Strahlengängen hängen i.a. von der Blickrichtung ab. Für Blickrichtungen, in denen ein gegebenes Brillenglas Vollkorrektion erreicht, unterscheiden sie sich in der Regel nicht, wie es beispielsweise beim Blick durch BF (idealerweise) der Fall sein kann. Hier liefert der Soll-Ist-Vergleich in beiden Berechnungsarten den Wert Null. Andererseits liefern beide Berechnungsarten für alle Blickrichtungen, in denen die Vollkorrektion verfehlt wird, u.U. stark unterschiedliche Ergebnisse. Dies gilt sowohl für die Betrachtung der Abbildungsfehler niedriger Ordnung (LOA) als auch der Abbildungsfehler höherer Ordnung (HOA), die durch das Brillenglas und das Auge erzeugt werden.

Zur Durchführung einer WF-Durchrechnung gehören im Wesentlichen folgende Schritte:

a) das Ermitteln aller relevanten Daten des Modellauges aus den Mess- und Refraktionsdaten, also das Festlegen eines individuellen Augenmodells; und

b) die Durchführung der eigentlichen WF-Durchrechnung anhand der Daten des Modellauges, insbesondere in der Gebrauchssituation des zu optimierenden Brillenglases.

Eine wesentliche Problematik beim Ermitteln aller relevanten Daten des Modellauges besteht darin, dass eben nicht notwendigerweise alle Daten von C, L1 und L2, sowie alle relevanten Längen im Auge durch Messung vorab bekannt sind. Zwar liegen die Daten von C vorzugsweise aufgrund einer Cornea-Messung vor, aber für $L_1$ und $L_2$ sowie alle relevanten Längen im Auge kennt man unter Umständen vorläufig nur die Durchschnittswerte der Bevölkerung. Im Allgemeinen passen die dann vorliegenden Daten von C, $L_1$, $L_2$ und der Längen nicht zur individuell ermittelten Fehlsichtigkeit (inkl. HOA) des Brillenträgers bzw. sind in diesem Stadium widersprüchlich. Daher werden vorzugsweise einige dieser Durchschnittsdaten verworfen und statt dessen individuelle Werte an die individuelle Fehlsichtigkeit angepasst. Aufgrund der benötigten Anzahl der Freiheitsgrade kommen hierfür insbesondere $L_1$ und/oder $L_2$ in Frage. Daraus ergeben sich folgende bevorzugte Vorgehensweisen:

1. $L_1$ wird angepasst, für $L_2$ werden Durchschnittswerte verwendet ("Auffüllen" von $L_1$)

2. $L_2$ wird angepasst, für $L_1$ werden Durchschnittswerte verwendet ("Auffüllen" von L2)

3. Sowohl $L_1$ als auch $L_2$ werden kombiniert angepasst.

Die Vorgehensweise ist somit vorzugsweise folgende:

1. Die WF-Durchrechnung wird symbolisch durchgeführt, ohne die Formeln numerisch auszuwerten (erster Teil o.g. Schritt b). Vorzugweise erfolgt diese WF-Durchrechnung aufgrund der Komplexität nicht rein symbolisch mit der exakten Berücksichtigung der abwechselnden Propagation und Brechung im 3-flächigen Augenmodell. So würden die Ausdrücke spätestens ab der Ordnung $n = 4$ auch für computer-implementierte symbolische Berechnungsverfahren kaum noch handhabbar. Vielmehr wird stattdessen vorzugsweise die Propagation und Refraktion im Wechsel durchgerechnet, wobei in Zwischenschritten (also insbesondere als einfallende und auslaufende Wellenfronten an den Grenzflächen) numerische Werte zur Beschreibung der Wellenfronten in der Taylor-Darstellung (z.B. bis hin zur 6. Ordnung) eingesetzt werden.

2. Bedingungen an das symbolische Ergebnis der WF-Durchrechnung im Messstrahlengang, die sich aus der Fehlsichtigkeit ergeben, werden nach den Daten von $L_1$ oder $L_2$ aufgelöst (o.g. Schritt a).

3. In den symbolischen Ergebnissen der WF-Durchrechnung werden die Daten von $L_1$ oder $L_2$ eliminiert und numerische Werte eingesetzt (zweiter Teil o.g. Schritt b). Anschließend wird die WF-Durchrechnung im Gebrauchsstrahlengang durchgeführt.

Zur Beschreibung von Propagation und Brechung werden vorzugsweise folgende Bezeichnungen genutzt:

$$\mathbf{S} = \begin{pmatrix} S_{xx} & S_{xy} \\ S_{xy} & S_{yy} \end{pmatrix}$$ ; Vergenzmatrix der auf die Cornea einfallenden Wellenfront

$$\mathbf{S'} = \begin{pmatrix} S'_{xx} & S'_{xy} \\ S'_{xy} & S'_{yy} \end{pmatrix}$$ ; Vergenzmatrix der an $L_2$ ausfallenden Wellenfront

$$\mathbf{C} = \begin{pmatrix} C_{xx} & C_{xy} \\ C_{xy} & C_{yy} \end{pmatrix}$$ ; Brechwertmatrix der Cornea

$$\mathbf{L}_1 = \begin{pmatrix} L_{1xx} & L_{1xy} \\ L_{1xy} & L_{1yy} \end{pmatrix}$$ ; Flächenbrechwertmatrix der Linsenvorderfläche

$$\mathbf{L}_2 = \begin{pmatrix} L_{2xx} & L_{2xy} \\ L_{2xy} & L_{2yy} \end{pmatrix}$$ ; Flächenbrechwertmatrix der Linsenrückfläche

$$\mathbf{D}_{LR} = \begin{pmatrix} D_{LR} & 0 \\ 0 & D_{LR} \end{pmatrix} = \begin{pmatrix} \dfrac{n_{LR}}{d_{LR}} & 0 \\ 0 & \dfrac{n_{LR}}{d_{LR}} \end{pmatrix}$$ ; Vergenzmatrix der Soll-WF an der Linsenrückfläche

Weiterhin sollen entsprechende Krümmungsmatrizen betrachtet werden:

$$\mathbf{S} = \mathbf{W}; \quad \mathbf{S'} = n_{LR}\mathbf{W'};$$
$$\mathbf{C} = (n_{CL} - 1)\mathbf{K}_C; \quad \mathbf{L}_1 = (n_L - n_{CL})\mathbf{K}_1; \quad \mathbf{L}_2 = (n_{LR} - n_L)\mathbf{K}_2; \quad \mathbf{D}_{LR} = n_{LR}\mathbf{K}_{LR}; \tag{1}$$

Mit diesen Bezeichnungen führt eine WF-Durchrechnung von S für die Eigenschaften 2. Ordnung, also die LOA von S' auf das Ergebnis

$$\mathbf{S'} = \left( \frac{\mathbf{S}+\mathbf{C}}{1 - \dfrac{d_{CL}}{n_{CL}}(\mathbf{S}+\mathbf{C})} + \mathbf{L}_1 \right)\left( 1 - \frac{d_L}{n_L}\left( \frac{\mathbf{S}+\mathbf{C}}{1 - \dfrac{d_{CL}}{n_{CL}}(\mathbf{S}+\mathbf{C})} + \mathbf{L}_1 \right) \right)^{-1} + \mathbf{L}_2 \tag{2}$$

In dem speziellen Fall, dass $S = S_{mess}$ die Vergenzmatrix der auf die Cornea einfallenden Wellenfront im Messstrahlengang ist (und damit entweder direkt aus der subjektiven oder der objektiven Refraktion bestimmt werden kann), muss S' einer Kugelwelle entsprechen, die auf die Retina konvergiert, d.h.

$$\mathbf{S}'_{mess} = \mathbf{D}_{LR} \qquad (3)$$

Die Gl.(2) kann nun wahlweise nach $L_1$ oder nach $L_2$ aufgelöst werden.

Auflösung von Gl.(2) nach L, ergibt :

$$\mathbf{L}_1 = \frac{\mathbf{D}_{LR} - \mathbf{L}_2}{1 + \dfrac{d_L}{n_L}\left(\mathbf{D}_{LR} - \mathbf{L}_2\right)} - \frac{\mathbf{S}_{mess} + \mathbf{C}}{1 - \dfrac{d_{CL}}{n_{CL}}\left(\mathbf{S}_{mess} + \mathbf{C}\right)} \qquad (4)$$

Auflösung von Gl.(2) nach $L_2$ ergibt:

$$\mathbf{L}_2 = \mathbf{D}_{LR} - \left(\frac{\mathbf{S}_{mess} + \mathbf{C}}{1 - \dfrac{d_{CL}}{n_{CL}}\left(\mathbf{S}_{mess} + \mathbf{C}\right)} + \mathbf{L}_1\right)\left(1 - \frac{d_L}{n_L}\left(\frac{\mathbf{S}_{mess} + \mathbf{C}}{1 - \dfrac{d_{CL}}{n_{CL}}\left(\mathbf{S}_{mess} + \mathbf{C}\right)} + \mathbf{L}_1\right)\right)^{-1} \qquad (5)$$

Die HOA, die die austretende Wellenfront enthält, müssen der Kugel mit Radius $d_{LR}$ entsprechen. Dies bedeutet, dass als Erweiterung der 2.Ordnung

$$W'_{xx} = \frac{1}{d_{LR}};\; W'_{xy} = 0;\; W'_{yy} = \frac{1}{d_{LR}}; \qquad (6)$$

dann für die 3. Ordnung gelten muss:

$$W'_{xxx} = 0;\; W'_{xxy} = 0;\; W'_{xyy} = 0;\; W'_{yyy} = 0; \qquad (7)$$

sowie für die 4. Ordnung:

$$W'_{xxxx} = \frac{3}{d_{LR}^3};\; W'_{xxxy} = 0;\; W'_{xxyy} = \frac{1}{d_{LR}^3};\; W'_{xyyy} = 0;\; W'_{yyyy} = \frac{3}{d_{LR}^3}; \qquad (8)$$

die 5. Ordnung:

$$W'_{xxxxx} = 0;\; W'_{xxxxy} = 0;\; W'_{xxxyy} = 0;\; W'_{xxyyy} = 0;\; W'_{xyyyy} = 0;\; W'_{yyyyy} = 0; \qquad (9)$$

und die 6. Ordnung:

$$W'_{xxxxxx} = \frac{45}{d_{LR}^5};\; W'_{xxxxxy} = 0;\; W'_{xxxxyy} = \frac{9}{d_{LR}^5};\; W'_{xxxyyy} = 0;\; W'_{xxyyyy} = \frac{9}{d_{LR}^5};\; W'_{xyyyyy} = 0;\; W'_{yyyyyy} = \frac{45}{d_{LR}^5}; \qquad (10)$$

Den allgemeinen Term bekommt man durch entsprechend häufiges Ableiten der Kugelfläche

$$f_{\text{Kugel}}(x,y) = R - \sqrt{R^2 - x^2 - y^2}$$

In den oben genannten Formeln bezeichnen $d_{CL}, n_{CL}, d_L, n_L, d_{LR}, n_{LR}$ die Dicken (Parameter d) bzw. Brechungsindizes (Parameter n) einzelner Elemente (optischer Medien) im Modellauge, insbesondere des optischen Mediums zwischen Hornhautvorderfläche und erster Linsenfläche (Index *CL*), zwischen ersten und zweiter Linsenfläche (Index *L*) bzw. zwischen zweiter Linsenfläche und Retina (Index *LR*).

Eine Anpassung der HOA von $L_1$ und/oder $L_2$ erreicht man vorzugsweise durch Berücksichtigung der Gleichungen (7)-(10) und entsprechende Auflösung nach den gesuchten Größen von $L_1$ bzw. $L_2$.

So ist es beispielsweise zweckmäßig, entsprechende Bezeichnungen wie in Gl.(1) auch für die höheren Ordnungen einzuführen. Will man beispielsweise die dritte Ordnung $S'_{xxx}$ bestimmen, dann kann man für die Brechung Gl. (74) in G. Esser, W. Becken, W. Müller, P. Baumbach, J. Arasa, und D. Uttenweiler: "Derivation of the refraction equations for higher order aberrations of local wavefronts at oblique incidence", JOSAA, Vol. 27, No. 2 (2010) (nachfolgend auch als "Ref[1]") bezeichnet) und für die Propatation Gl. (55) in G. Esser, W. Becken, W. Müller, P. Baumbach, J. Arasa, und D. Uttenweiler: "Derivation of the propagation equations for higher order aberrations of local wavefronts", JOSAA, Vol. 28, No. 11 (2011) (nachfolgend auch als "Ref[2]") bezeichnet) verwenden. Nimmt man weiter beispielhaft an, dass alle anderen Größen mit Indizes "xxy", "xyy" und "yyy" verschwinden sollen, dann kann man die "xxx"-Komponente für die HOA der austretenden Vergenz bestimmen als

$$S'_{xxx} = \beta_L^3 \left( \beta_{CL}^3 \left( S_{xxx} + C_{xxx} \right) + L_{1,xxx} \right) + L_{2,xxx} \tag{11}$$

mit

$$\beta_{CL} = \cfrac{1}{1 - \cfrac{d_{CL}}{n_{CL}} \left( S_{xx} + C_{xx} \right)}$$
$$\beta_L = \cfrac{1}{1 - \cfrac{d_L}{n_L} \left( L_{1,xx} + \beta_{CL} \left( S_{xx} + C_{xx} \right) \right)} \tag{12}$$

In dem speziellen Fall, dass $S_{xxx} = S_{mess,xxx}$ die Komponente 3. Ordnung der auf die Cornea einfallenden Wellenfront im Messstrahlengang ist (und damit entweder direkt aus der subjektiven oder der objektiven Refraktion bestimmt werden kann), kann Gl.(7) bzw. Gl.(11) für die austretende Kugelwelle nach $L_{1,xxx}$ oder $L_{2,xxx}$ aufgelöst werden. Dies ergibt

$$L_{1,xxx} = -\beta_L^{-3} L_{2,xxx} - \beta_{CL}^3 \left( S_{mess,xxx} + C_{xxx} \right) \tag{13}$$

bzw.

$$L_{2,xxx} = -\beta_L^3 \left( \beta_{CL}^3 \left( S_{mess,xxx} + C_{xxx} \right) + L_{1,xxx} \right) \tag{14}$$

In Anbetracht von Gl.(13,14) stellt sich die Frage, ob man generell so leicht die Komponenten höherer Ordnung von $L_1$ oder $L_2$ bestimmen kann. Dies ist in der Tat der Fall. Der Grund hierfür liegt darin, dass sowohl Gl.(74) in Ref.[1] und für die Propagation Gl.(55) in Ref.[2] das Merkmal besitzen, dass sie linear in den jeweils höchsten Ordnungen sind, und die Restterme nur Beiträge enthalten, die um mindestens 1 niedriger sind als die führende Ordnung. Dadurch kann man bei bekannten Komponenten (etwa von $L_1$) zweiter Ordnung alle Komponenten 3. Ordnung restlos bestimmen. Auf deren Grundlage folgt dann die Berechnung der Komponenten 4. Ordnung, etc. Die Auflösung nach allen Komponenten von $L_1$ oder $L_2$ bis einschließlich 4. Ordnung lässt sich auch im Computer symbolisch implementieren. In einer bevorzugten Ausführungsform erfolgt aber wegen der zunehmenden Komplexität dennoch eine numerische Evaluierung der Ausdrücke für alle Lösungen bereits ab der 3.Ordnung.

Passt man eine der Größen $L_1$ oder $L_2$ an die Messwerte an, dann muss man über den anderen Annahmen treffen, die beispielsweise der Literatur über den Bevölkerungsdurchschnitt zu entnehmen sind. Es ist daher vorteilhaft, denjenigen Teil der Linse anzupassen, über den die geringere Güte an Informationen vorliegt.

Sind die $L_1$ oder $L_2$ gleich gut der Literatur zu entnehmen, dann ist es dennoch nicht gleichgültig, welche von beiden Linsenflächen angepasst wird. Leitet man Gl.(2) nach den Komponenten von $L_1$ und $L_2$ ab und wertet man für Durchschnittswerte (Index $\varnothing$) des "Bennett und Rabbetts"-Auges sowie für emmetrope Refraktion aus, dann kommt man zu dem Ergebnis, dass die Komponenten von $L_1$ empfindlicher in S' eingehen, und zwar etwa um den Faktor 1.4. Man hat für die Komponenten von $L_1$

$$\left.\frac{\partial S'}{\partial L_{1,xx}}\right|_\varnothing = \begin{pmatrix} 1.37 & 0.03 \\ 0.03 & 0.0008 \end{pmatrix}, \quad \left.\frac{\partial S'}{\partial L_{1,xy}}\right|_\varnothing = \begin{pmatrix} 0.065 & 1.37 \\ 1.37 & 0.065 \end{pmatrix}, \quad \left.\frac{\partial S'}{\partial L_{1,yy}}\right|_\varnothing = \begin{pmatrix} 0.0008 & 0.03 \\ 0.03 & 1.37 \end{pmatrix}, \quad (15)$$

und für die Komponenten von $L_2$

$$\left.\frac{\partial S'}{\partial L_{2,xx}}\right|_\varnothing = \begin{pmatrix} 1 & 0 \\ 0 & 0 \end{pmatrix}, \quad \left.\frac{\partial S'}{\partial L_{2,xy}}\right|_\varnothing = \begin{pmatrix} 0 & 1 \\ 1 & 0 \end{pmatrix}, \quad \left.\frac{\partial S'}{\partial L_{2,yy}}\right|_\varnothing = \begin{pmatrix} 0 & 0 \\ 0 & 1 \end{pmatrix}, \quad (16)$$

Geht man noch von der Annahme aus, dass für die Bevorzugung von $L_1$ oder $L_2$ hauptsächlich die LOA ausschlaggebend sind, dann ist aus diesem Grunde für eine Anpassung $L_1$ leicht zu bevorzugen.

Sind konkrete Refraktionsergebnisse, Aberrometermessdaten und Hornhaut-Topographiedaten vorhanden, dann kann darauf nun eine WF-Durchrechnung aufbauen.

In einer bevorzugten Ausführungsform umfasst also das Festlegen eines individuellen Augenmodells ein Bestimmen einer auf eine erste brechende Fläche des festzulegenden individuellen Augenmodells auftreffende Wellenfront und eine aus einer letzten brechenden Fläche des festzulegenden individuellen Augenmodells auslaufenden Wellenfront derart, dass die Veränderung von der auftreffenden zur auslaufenden Wellenfront die erfassten Refraktionsdaten beschreiben. Besonders bevorzugt wird die auftreffende Wellenfront als sphärische Wellenfront bestimmt, während die auslaufende Wellenfront die Refraktionsdaten des zumindest einen Auges verwirklicht. So ist es besonders bevorzugt, wenn die auftreffende Wellenfront als eine von einem Punkt auf der Netzhaut des Modellauges auslaufende und auf die hintere Linsenfläche $L_2$ (als erste brechende Fläche) auftreffende sphärische Wellenfront bestimmt wird, während die Hornhautvorderfläche des Modellauges als letzte brechende Fläche festgelegt wird von der aus eine Wellenfront ausläuft, deren Wellenfrontaberrationen den in einer Aberrationsmessung des echten Auges ermittelten Wellenfrontaberrationen entspricht. Damit wird im Modell die echte Aberrationsmessung sehr genau nachgebildet.

Das Festlegen des individuellen Augenmodells umfasst somit vorzugsweise ein Festlegen einer Vielzahl von brechenden Flächen als Grenzflächen zwischen einer Vielzahl von optischen Medien (Elementen des Modellauges) mit unterschiedlichem Brechungsindex. Wie bereits oben beschrieben eignen sich Augenmodelle mit drei brechenden Flächen, insbesondere der Hornhautvorderfläche, der Linsenvorderfläche und der Linsenrückfläche besonders gut. Diese brechenden Flächen trennen damit die einzelnen angrenzenden Elemente (Hornhaut, Linse, Glaskörper) des Modellauges voneinander. In einer besonders bevorzugten Ausführungsform umfasst das Festlegen des individuellen Augenmodells insbesondere ein Festlegen eines vorzugsweise wellenlängenabhängigen Brechungsindex (Dispersion) für jedes der durch die brechenden Flächen voneinander getrennten Elemente des Modellauges.

Vorzugsweise umfasst damit das Festlegen eines individuellen Augenmodells ein Bestimmen der Vielzahl von brechenden Flächen des Modellauges (des Augenmodells) derart, dass die durch die Vielzahl von brechenden Flächen des Modellauges bewirkten Wellenfrontaberrationen den am Auge des Brillenträgers tatsächlich gemessenen Aberrationen entsprechen. Hierfür wird insbesondere auch die Wellenlänge des Lichts, mit dem die tatsächliche Messung durchgeführt wurde berücksichtigt. Dies ist zusammen mit einer Berücksichtigung der Dispersion der einzelnen Elemente des Modellauges besonders bevorzugt. So werden Aberrationsmessung sehr oft beispielsweise mit infrarotem Licht durchgeführt. Die damit gemessenen Aberrationen entsprechen genau dem realen Auge bei der Messwellenlänge. Soweit aufgrund der Dispersion der einzelnen Medien im realen Augen diese Aberrationen aber nicht mit den Aberrationen bei der Wellenlänge des Lichts für die spätere Nutzung der Brille (sichtbares Licht) übereinstimmen, muss für die Fertigung einer gut angepassten Brille eine entsprechende Korrektur der gemessenen Aberrationen vorgenommen werden. Dieses Problem ist bereits seit langem bekannt. Herkömmliche Aberrometer rechnen diese Korrektur in der Regel bereits pauschal, also ohne Berücksichtigung individueller physiologischer Parameter, mit ein und geben oft nur die entsprechend korrigierten Werte der Aberrationen aus.

Mit Hilfe der vorliegenden Erfindung ist es in einer bevorzugten Ausführungsform nun aber möglich, die individuelle Berechung und Optimierung deutlich zu verbessern, indem die Berücksichtigung der Wellenlängenabhängigkeit der Aberrationen zumindest über die individuell bestimmten Flächenkrümmungen der einzelnen brechenden Flächen des Modellauges ebenfalls individuell erfolgt. So ist es mit der erfindungsgemäßen Vorgehensweise nicht mehr nötig pauschal korrigierte Aberrationen für die Optimierung zu berücksichtigen. Vielmehr werden vorzugsweise bei der Festlegung des individuellen Augenmodells die exakten Messdaten der Aberrationen des realen Auges herangezogen, um das Modellauge so festzulegen, dass es genau diese gemessenen Aberrationen bewirkt und zwar insbesondere bei genau der Wellenlänge, bei der die Messung durchgeführt wurde. Dazu wird für die einzelnen Elemente des Modellauges (z.B. Hornhaut, Linse, Glaskörper) jeweils für den Brechungsindex eine Wellenlängenabhängigkeit (Dispersion) vorgegeben. Dabei ist es nicht einmal erforderlich, diese Dispersion individuell zu ermitteln. Stattdessen kann auf Literaturwerte bekannter Dispersionen oder Modelle von Dispersionen zurückgegriffen werden. Anders als die Abstände und/oder Krümmungen der einzelnen brechenden Flächen, welche sich von Person zu Person bzw. von Auge zu Auge deutlich unterscheiden können, ist die Variation der Brechungsindizes und deren Dispersion für die einzelnen Medien im Auge von Person zu Person meist sehr gering und kann im Rahmen einer bevorzugten Ausführungsform der Erfindung sogar vernachlässigt werden. Unterschiedliche Flächenkrümmungen der brechenden Flächen können sich aber durchaus deutlich auf die Wellenlängenabhängigkeit des gesamten Brechungsverhaltens des Auges individuell auswirken.

Werden somit die brechenden Flächen derart angepasst, dass sie für die Messwellenlänge (z.B. Infrarot) einer Aberrationsmessung genau zu den gemessenen Aberrationen führen, bildet dieses Modellauge (also mit den ermittelten Positionen und Krümmungen der brechenden Flächen) aufgrund der für die einzelnen Medien berücksichtigten Dispersion automatisch auch sehr gut das Verhalten des realen Auges für sichtbares Licht nach. Falls die Aberrationen des realen Auges bereits durch eine herkömmliche Messung bestimmt wurden, welche nach herkömmlicher Methode bereits pauschal korrigiert wurden, um damit eine genäherte Aberration bei einer anderen Wellenlänge als der Messwellenlänge zu bieten, ist es besonders bevorzugt, wenn man den damit eingeführten Fehler dadurch wieder behebt, dass zunächst auf die originalen, gemessenen Aberrationen bei der Messwellenlänge zurückgerechnet wird. Aus diesen Aberrationen kann dann wie beschrieben das individuelle Augenmodell bestimmt werden. Die Transformation zu sichtbarem Licht erfolgt damit dann individuell über die Berücksichtigung der Dispersion der einzelnen Elemente des Modellauges.

Insgesamt ist es also besonders bevorzugt, wenn das individuelle Modellauge zunächst anhand von Parametern, welche vorzugsweise Positionen und/oder Krümmungen einer Vielzahl von brechenden Flächen festgelegt wird und diese Parameter dann individuell unter Berücksichtigung der erfassten Refraktionsdaten des realen Auges beispielsweise in der oben beschriebenen Weise anhand eines Wavefront-Tracing-Verfahrens ermittelt werden. Dabei wird besonders bevorzugt die Wellenlängenabhängigkeit des Brechungsindexübergangs an den einzelnen brechenden Flächen bzw. die Wellenlängenabhängigkeit des Brechungsindex einzelner optischen Elemente des Modellauges vorab festgelegt. Bevorzugte Beispiele für Dispersionen einzelner Elemente des Auges sind unter anderem in Bennett & Rabbetts' "Clinical Visual Optics", Butterworth Heinemann (2007) (z.B. dortiges Kapitel 15, Abschnitt "Chromatic aberrations") oder auch in der Veröffentlichung von D.A.Atchison und G. Smith "Chromatic dispersions of the ocular media of human eyes", J. Opt. Soc. Am. A, Vol. 22, no. 1 beschrieben.

In anderen Worten umfasst das Festlegen des individuellen Augenmodells vorzugsweise ein Vorgeben einer Vielzahl brechender Flächen (vorzugsweise 3), von denen zumindest eine durch einen Satz von Parametern beschrieben wird. Diese Parameter können beispielsweise die oben beschriebenen Elemente der Krümmungsmatrizen (in symbolischer Form) sein. Insbesondere kann beispielsweise zumindest eine der beiden Linsenflächen $L_1$ oder $L_2$ auf diese Weise beschrieben werden, während eventuell andere brechende Flächen fest vorgegeben werden. Diese Vorgabe kann dabei entweder für alle Augen gleich oder aber auch individuell auf Basis weiterer Messungen (z.B. der Hornhautvorderfläche) erfolgen. Nun werden für den Satz von Parametern individuelle Werte derart ermittelt, dass das Auge des Augenmodells die erfassten Refraktionsdaten aufweist. Dies kann beispielsweise anhand der obigen Gleichungen (4) für $L_1$ bzw. (5) für $L_2$ erfolgen.

In einem weiteren Aspekt ist es besonders bevorzugt, wenn das Erfassen von Refraktionsdaten des zumindest einen Auges ein Messen der Refraktionsdaten mittels Licht einer Messwellenlänge umfasst. Dabei ist es wiederum bevorzugt, wenn das Festlegen des individuellen Augenmodells umfasst:

- Festlegen einer Wellenlängenabhängigkeit des Brechungsindex (n) zumindest eines optischen Elements (z.B. Hornhaut und/oder Linse und/oder Glaskörper) des individuellen Augenmodells; und
- Ermitteln einer Geometrie des optischen Elements (z.B. Lage und/oder Krümmung der brechenden Flächen) derart, dass das Auge des Augenmodells bei der festgelegten Wellenlängenabhängigkeit und bei der Messwellenlänge die gemessenen Refraktionsdaten aufweist.

In einer bevorzugten Ausführungsform erfolgt das Ermitteln der resultierenden Wellenfront ($w_e$) mittels Wavefront-Tracing. Dabei werden insbesondere die Brechungen der Wellenfronten an den einzelnen Grenzflächen ebenso wie die Propagation der Wellenfronten zwischen verschiedenen Grenzflächen durch Transformationen von Parametern durchgeführt, die die Krümmungen der Wellenfronten beschreiben.

In einer anderen Ausführungsform wird insbesondere zur Berechnung der Propagation der Wellenfronten zwischen zwei Brechungsflächen eine Strahldurchrechnung (Ray-Tracing) durchgeführt.

In einer bevorzugten Ausführungsform umfasst das Ermitteln der resultierenden Wellenfront:

- ein Berechnen einer an der ersten Fläche des Brillenglases gebrochenen Wellenfront (in einer Umgebung des Hauptstrahls) aus der vorgegebenen sphärischen Wellenfront ($w_0$) und der vorgegebenen ersten Fläche;
- ein Berechnen einer durch das Brillenglas entlang des Hauptstrahls propagierten Wellenfront aus der berechneten, an der ersten Fläche gebrochenen Wellenfront;
- ein Berechnen einer an der zweiten Fläche des Brillenglases gebrochenen Wellenfront ($w_{g1}$) (in einer Umgebung des Hauptstrahls) aus der berechneten, durch das Brillenglas propagierten Wellenfront und der vorgegebenen zweiten Fläche;
- Berechnen einer entlang des Hauptstrahls zur Hornhautvorderfläche propagierten Wellenfront ($w_{g2}$) aus der berechneten, an der zweiten Fläche gebrochenen Wellenfront ($w_{g1}$);
- Berechnen einer an der Hornhautvorderfläche gebrochenen Wellenfront (in einer Umgebung des Hauptstrahls) aus der berechneten, zur Hornhautvorderfläche propagierten Wellenfront ($w_{g2}$) und der vom individuellen Augenmodell festgelegten Topographie der Hornhautvorderfläche;
- Berechnen einer entlang des Hauptstrahls zur Linse propagierten Wellenfront aus der berechneten, an der Hornhautvorderfläche gebrochenen Wellenfront; und
- Berechnen einer durch die Linse gebrochenen Wellenfront ($w_e$) (in einer Umgebung des Hauptstrahls) aus der berechneten, zur Linse propagierten Wellenfront und der vom individuellen Augenmodell festgelegten Wirkung der Linse. Je nach Ausführungsform kann diese von der Linse gebrochene Wellenfront unmittelbar als resultierende Wellenfront herangezogen werden, oder es wird nochmals eine Propagation der von der Linse gebrochenen Wellenfront berechnet, um die resultierende Wellenfront zu erhalten.

Die Umgebung um den Hauptstrahl, innerhalb der die Berechung der Wellenfronten und deren Auswertung erfolgen, wird vorzugsweise gemäß der individuell bestimmten (gemessenen) Pupillengröße gewählt. Diese kann insbesondere für verschiedene Durchblickspunkte (und damit verschiedene Objektentfernungen) unterschiedlich gewählt werden.

Vorzugsweise umfasst das Erfassen von Refraktionsdaten für das zumindest eine Auge ein Erfassen von Daten bezüglich der sphärischen Wirkung $Sph_V$, des Betrags des Astigmatismus $Zyl_V$, der Astigmatismusachse $Achse_V$ sowie zumindest einer weiteren Refraktion höherer Ordnung $HOA_V$ des Auges.

Besonders bevorzugt werden auch Abbildungsfehler höherer Ordnung in der Optimierung berücksichtigt. Vorzugsweise umfasst das Verfahren dabei ein Erfassen von Verordnungs- bzw. Refraktionsdaten $V$, wobei die Verordnungsdaten Daten bezüglich der sphärischen Wirkung $Sph_V$, des Betrags des Astigmatismus $Zyl_V$, der Astigmatismusachse $Achse_V$ sowie zumindest einer weiteren vorgegebenen Refraktion höherer Ordnung $HOA_V$ umfassen.

Die Abbildungsfehler höherer Ordnung können auf verschiedene Weise in der Zielfunktion berücksichtigt werden. In einer bevorzugten Ausführungsform umfasst das Verfahren ein Minimieren einer Zielfunktion, in der Werte von Abbildungsfehlern höherer Ordnung explizit berücksichtigt werden, z.B. in Form von

$$\min F = \sum_i G_{R,i} \left( R_{Ist}(i) - R_{Soll}(i) \right)^2 + G_{A,i} \left( A_{Ist}(i) - A_{Soll}(i) \right)^2 + G_{C,i} \left( C_{Ist}(i) - C_{Soll}(i) \right)^2$$
$$+ G_{S,i} \left( S_{Ist}(i) - S_{Soll}(i) \right)^2 + ...$$

$R_{Ist}(i)$     tatsächliche Fehlrefraktion des Augenmodells mit Brillenglas an der i-ten Bewertungsstelle, d.h. Abweichung des sphärischen Anteils der im individuellen Augenmodell für den i-ten Durchblickspunkt (Bewertungsstelle) resultierenden Wellenfront (also hinter der Augenlinse) von der Referenzwellenfront (also einer auf der Netzhaut konvergierenden sphärischen Wellenfront)

$R_{Soll}(i)$     geforderte Fehlrefraktion an der i-ten Bewertungsstelle (Vorgabe des Designs)

$G_{R,i}$     Gewichtung der Fehlrefraktion an der i-ten Bewertungsstelle (Vorgabe des Designs)

$A_{Ist}(i)$     tatsächlicher astigmatischer Anteil der resultierenden Wellenfront an der i-ten Bewertungsstelle im individuellen Augenmodell

$A_{Soll}(i)$     geforderte astigmatische Fehlanpassung an der i-ten Bewertungsstelle (Vorgabe des Designs)

$G_{A,i}$     Gewichtung der astigmatischen Fehlanpassung an der i-ten Bewertungsstelle (Vorgabe des Desings)

und zusätzlich

$C_{Ist}(i)$      tatsächliche Coma der resultierenden Wellenfront an der i-ten Bewertungsstelle im individuellen Augenmodell;
$C_{Soll}(i)$      geforderte Coma an der i-ten Bewertungsstelle (Vorgabe des Desings)
$G_{C,i}$      Gewichtung der Coma an der i-ten Bewertungsstelle (Vorgabe des Desings)
$S_{Ist}(i)$      tatsächliche sphärische Aberration der resultierenden Wellenfront an der i-ten Bewertungsstelle
$S_{Soll}(i)$      geforderte sphärische Aberration an der i-ten Bewertungsstelle (Vorgabe des Desings)
$G_{S,i}$      Gewichtung der sphärischen Aberration an der i-ten Bewertungsstelle (Vorgabe des Desings)

Bei einer Erweiterung der Zielfunktion um die Terme der Abbildungsfehler höherer Ordnung erhöht sich jedoch der Grad der Überbestimmung des zu lösenden Gleichungssystems, wodurch sich in einigen Fällen die Stabilität des Optimierungsverfahrens verschlechtern kann. Daher wird in einer weiteren bevorzugten Ausführungsform vorgeschlagen, bei der Auswertung der resultierenden Wellenfront in der Zielfunktion die Aberrationen höherer Ordnung nicht explizit als eigene Terme mit eigenen Vorgaben aus dem Design in die Zielfunktion einfließen zu lassen, sondern sie in Form transformierter sphäro-zylindrischer Werte zu berücksichtigen. Vorzugsweise umfasst das Verfahren in diesem Fall ein Minimieren einer Zielfunktion, in der Werte von Abbildungsfehlern höherer Ordnung implizit über transformierte Werte des Refraktionsfehlers und des astigmatischen Anteils der resultierenden Wellenfront berücksichtigt werden, z.B. in Form von

$$\min F = \sum_i G_{R,i}\left(R_{Ist,t}(i) - R_{Soll}(i)\right)^2 + G_{A,i}\left(A_{Ist,t}(i) - A_{Soll}(i)\right)^2$$

$R_{Ist,t}(i)$      transformierte Fehlrefraktion des Augenmodells mit Brillenglas an der i-ten Bewertungsstelle, d.h. transformierte Abweichung des sphärischen Anteils der im individuellen Augenmodell für den i-ten Durchblickspunkt (Bewertungsstelle) resultierenden Wellenfront (also hinter der Augenlinse) von der Referenzwellenfront (also einer auf der Netzhaut konvergierenden sphärischen Wellenfront)
$R_{Soll}(i)$      geforderte Fehlrefraktion an der i-ten Bewertungsstelle (Vorgabe des Designs)
$G_{R,i}$      Gewichtung der Fehlrefraktion an der i-ten Bewertungsstelle (Vorgabe des Designs)
$A_{Ist,t}(i)$      transformierter astigmatischer Anteil der resultierenden Wellenfront an der i-ten Bewertungsstelle im individuellen Augenmodell
$A_{Soll}(i)$      geforderte astigmatische Fehlanpassung an der i-ten Bewertungsstelle (Vorgabe des Designs)
$G_{A,i}$      Gewichtung der astigmatischen Fehlanpassung an der i-ten Bewertungsstelle (Vorgabe des Desings)

Die resultierende Wellenfront wird also in einer Umgebung des Hauptstrahls vorzugsweise durch Zernike-Polynome niedriger Ordnung (bis einschließlich Zylinder + Achse, also Astigmatismus) angenähert. Dabei fließen in die Zielfunktion als Werte der Wellenfront-Aberrationen nicht direkt die Koeffizienten einer Zernike-Entwicklung um den Hauptstrahl herum ein. Stattdessen werden transformierte Werte der Koeffizienten niedriger Ordnung verwendet, die eine Annäherung an die Wellenfront auch in einer Umgebung um den Hauptstrahl berücksichtigen.

Um anzugeben, wie die transformierte sphäro-zylindrische Refraktion (in Minus-Zylinder-Schreibweise) von den Abbildungsfehlern höherer Ordnung in bevorzugten Ausführungsformen abhängt, werden vorzugsweise folgende Funktionen bereitgestellt:

$$sph(u,v,w;r_0) = \frac{4\sqrt{3}}{r_0^2}\left(u + \frac{\sqrt{2}\sqrt{v^2 + w^2}}{2}\right)$$

$$zyl(v,w;r_0) = -\frac{4\sqrt{3}}{r_0^2}\sqrt{2}\sqrt{v^2 + w^2}$$

$$a(v,w;r_0) = \frac{1}{2}\arctan(w,v)$$

mit

$$\arctan(x,y) := \begin{cases} \arctan(y/x) & , \quad x > 0 \\ \arctan(y/x) + \pi, & x < 0, y > 0 \\ \pi, & x < 0, y = 0 \\ \arctan(y/x) - \pi, & x < 0, y < 0 \end{cases}$$

In einer Ausführungsform, in der die Abbildungsfehler höherer Ordnung zumindest nicht explizit zur Transformation der sphäro-zylindrischen Werte herangezogen werden, wird eine transformierte Refraktion vorzugsweise gegeben durch:

$$Sph\left(c_2^0, c_2^{-2}, c_2^2, \{c_n^m\}; r_0\right) = sph\left(c_2^0, c_2^{-2}, c_2^2; r_0\right)$$

$$Zyl\left(c_2^0, c_2^{-2}, c_2^2, \{c_n^m\}; r_0\right) = zyl\left(c_2^{-2}, c_2^2; r_0\right)$$

$$A\left(c_2^0, c_2^{-2}, c_2^2, \{c_n^m\}; r_0\right) = a\left(c_2^{-2}, c_2^2; r_0\right),$$

wobei die $c_2^0, c_2^{-2}, c_2^2$ Zernike-Koeffizienten zweiter Ordnung und $c_n^m$ mit $n \geq 3$ Zernike-Koeffizienten höherer Ordnung der Wellenfront in der Notation des OSA-Standards darstellen, siehe z.B. Jason Porter et al. "Adaptive Optics for Vision Science", Wiley (2006), S. 522. Die Größe $r_0$ steht für den Pupillenradius. Dazu umfasst das Verfahren vorzugsweise ein Erfassen eines Pupillenradius $r_0$. Außerdem umfasst das Verfahren vorzugsweise ein Ermitteln von Zernike-Koeffizienten zweiter Ordnung ( $c_2^0, c_2^{-2}, c_2^2$ ).

Eine bevorzugte Ausführungsform unter Berücksichtigung der Abbildungsfehler höherer Ordnung bei der Bestimmung der transformierten sphäro-zylindrischen Refraktion, also bei einer Transformation der sphäro-zylindrischen Werte in Abhängigkeit von den zweiten, sekundären Koeffizienten, ist gegeben durch:

$$Sph\left(c_2^0, c_2^{-2}, c_2^2, \{c_n^m\}\right) = sph\left(c_2^0, c_2^{-2} + \sqrt{5/3}c_4^{-2}, c_2^2 + \sqrt{5/3}c_4^2\right)$$

$$Zyl\left(c_2^0, c_2^{-2}, c_2^2, \{c_n^m\}\right) = zyl\left(c_2^{-2} + \sqrt{5/3}c_4^{-2}, c_2^2 + \sqrt{5/3}c_4^2\right)$$

$$A\left(c_2^0, c_2^{-2}, c_2^2, \{c_n^m\}\right) = a\left(c_2^{-2} + \sqrt{5/3}c_4^{-2}, c_2^2 + \sqrt{5/3}c_4^2\right)$$

Eine weitere, dazu alternative bevorzugte Ausführungsform ist gegen durch:

$$Sph\left(c_2^0, c_2^{-2}, c_2^2, \{c_n^m\}\right) = sph\left(c_2^0 + \sqrt{5/3}c_4^0, c_2^{-2} + \sqrt{5/3}c_4^{-2}, c_2^2 + \sqrt{5/3}c_4^2\right)$$

$$Zyl\left(c_2^0, c_2^{-2}, c_2^2, \{c_n^m\}\right) = zyl\left(c_2^{-2} + \sqrt{5/3}c_4^{-2}, c_2^2 + \sqrt{5/3}c_4^2\right)$$

$$A\left(c_2^0, c_2^{-2}, c_2^2, \{c_n^m\}\right) = a\left(c_2^{-2} + \sqrt{5/3}c_4^{-2}, c_2^2 + \sqrt{5/3}c_4^2\right)$$

Eine weitere bevorzugte Ausführungsform ist gegen durch:

$$Sph\left(c_2^0, c_2^{-2}, c_2^2, \{c_n^m\}\right) = sph\left(c_2^0 + 2\sqrt{15}c_4^0, c_2^{-2} + 3\sqrt{15}c_4^{-2}, c_2^2 + 3\sqrt{15}c_4^2\right)$$

$$Zyl\left(c_2^0, c_2^{-2}, c_2^2, \{c_n^m\}\right) = zyl\left(c_2^{-2} + 3\sqrt{15}c_4^{-2}, c_2^2 + 3\sqrt{15}c_4^2\right)$$

$$A\left(c_2^0, c_2^{-2}, c_2^2, \{c_n^m\}\right) = a\left(c_2^{-2} + 3\sqrt{15}c_4^{-2}, c_2^2 + 3\sqrt{15}c_4^2\right)$$

Etwas allgemeiner ist eine bevorzugte Ausführungsform gegeben durch die Funktionen:

$$Sph\left(c_2^0, c_2^{-2}, c_2^2, \{c_n^m\}\right) = sph\left(c_2^0 + \Delta c_2^0, c_2^{-2} + \Delta c_2^{-2}, c_2^2 + \Delta c_2^2\right)$$

$$Zyl\left(c_2^0, c_2^{-2}, c_2^2, \{c_n^m\}\right) = zyl\left(c_2^{-2} + \Delta c_2^{-2}, c_2^2 + \Delta c_2^2\right)$$

$$A\left(c_2^0, c_2^{-2}, c_2^2, \{c_n^m\}\right) = a\left(c_2^{-2} + \Delta c_2^{-2}, c_2^2 + \Delta c_2^2\right)$$

bei denen die Änderungen $\Delta c_2^0$, $\Delta c_2^{-2}$, $\Delta c_2^2$ Funktionen (insbesondere stetige Funktionen) der Zernike-Koeffizienten $c_n^m$ höherer Ordnung der Wellenfunktion sind, wobei $n \geq 3$ ist.

Besonders bevorzugt umfasst das Erfassen von Refraktionsdaten ein Erfassen von ersten Refraktionsdaten für eine erste Objektentfernung und von zweiten Refraktionsdaten für eine zweite Objektentfernung umfasst. Insbesondere kann damit der Einfluss der Objektentfernung auf die Pupillengröße individuell berücksichtigt werden. So wirkt sich eine veränderte Pupillengröße vor allem auf die Abbildungsfehler höherer Ordnung aus.

Das erfindungsgemäße Verfahren umfasst außerdem:

- Vorgabe eines Objektabstandsmodells $A1(x,y)$, wobei $A1$ die Objektentfernung und $(x,y)$ eine Durchblickstelle bzw. einen Durchblickspunkt des Brillenglases in einer vorgegebenen oder vorgebbaren Blickrichtung bezeichnen;
- Vorgabe einer Funktion $r_0 = g(A1)$, welche die Abhängigkeit einer Pupillengröße $r_0$ von der Objektentfernung $A1$ beschreibt;
- Ermitteln einer Pupillengröße für den zumindest einen Hauptstrahl anhand des Objektabstandsmodells $A1(x, y)$ und der vorgegebenen Funktion $r_0 = g(A1)$. Vorzugsweise ist das zu optimierende Brillenglas ein progressives Brillenglas.

In einem weiteren Aspekt bietet die Erfindung eine Vorrichtung zum Berechnen oder Optimieren eines Brillenglases für zumindest ein Auge eines Brillenträgers gemäß Anspruch 10. Die Vorrichtung umfasst:

- eine Datenschnittstelle zum Erfassen von Refraktionsdaten des zumindest einen Auges des Brillenträgers;
- ein Modellierungsmodul zum Festlegen eines individuellen Augenmodells, welches zumindest

-- die Topographie einer Hornhautvorderfläche des zumindest einen Auges,
-- Position und Wirkung einer Linse des Auges und
-- eine Retina-Position des Auges

derart festlegt, dass das Auge die erfassten Refraktionsdaten aufweist;
- eine Flächenmodelldatenbank zum Vorgeben einer ersten Fläche und einer zweiten Fläche für das zu berechnende bzw. optimierenden Brillenglas;
- ein Hauptstrahlermittlungsmodul zum Ermitteln des Verlaufs eines Hauptstrahls durch zumindest einen Durchblickspunkt $(i)$ zumindest einer zu berechnenden oder optimierenden Fläche des Brillenglases;
- ein Objektmodellmodellierungsmodul zum Vorgeben einer auf die erste Fläche des Brillenglases entlang des Hauptstrahls auftreffenden sphärischen Wellenfront $(w_0)$;
- ein Wellenfrontberechnungsmodul zum Ermitteln einer durch die Wirkung zumindest der ersten und zweiten Fläche des Brillenglases, der Hornhautvorderfläche und der Linse des zumindest einen Auges aus der sphärischen Wellenfront in einer Umgebung des Hauptstrahls resultierenden Wellenfront ($w_e$) in dem zumindest einen Auge;

- ein Optimierungsmodul, welches ausgelegt ist zum iterativen Variieren der zumindest einen zu berechnenden oder optimierenden Fläche des Brillenglases bis eine Aberration der resultierenden Wellenfront einer vorgegebenen Sollaberration entspricht.

Außerdem bietet die Erfindung ein Computerprogrammerzeugnis, welches ausgelegt ist, wenn geladen und ausgeführt auf einem Computer, ein Verfahren zum Berechnen oder Optimieren eines Brillenglases gemäß der vorliegenden Erfindung insbesondere in einer bevorzugten Ausführungsform durchzuführen.

Außerdem bietet die Erfindung ein Speichermedium mit darauf gespeichertem Computerprogramm, wobei das Computerprogramm ausgelegt ist, wenn geladen und ausgeführt auf einem Computer, ein Verfahren zum Berechnen oder Optimieren eines Brillenglases gemäß der Erfindung insbesondere in einer bevorzugten Ausführungsform durchzuführen.

Außerdem bietet die Erfindung ein Verfahren zum Herstellen eines Brillenglases umfassend:

Berechnen oder Optimieren eines Brillenglases nach dem Verfahren zum Berechnen oder Optimieren eines Brillenglases gemäß einem der vorliegenden Erfindung insbesondere in einer bevorzugten Ausführungsform; und Fertigen des so berechneten oder optimierten Brillenglases.

Außerdem bietet die Erfindung eine Vorrichtung zum Herstellen eines Brillenglases umfassend:

Berechnungs- oder Optimierungsmittel, welche ausgelegt sind, das Brillenglas nach einem Verfahren zum Berechnen oder Optimieren eines Brillenglases gemäß der vorliegenden Erfindung insbesondere in einer bevorzugten Ausführungsform zu berechnen oder zu optimieren; Bearbeitungsmittel, welche ausgelegt sind, das Brillenglas fertig zu bearbeiten.

Bevorzugte Ausführungsformen der Erfindung werden nachfolgend unter Bezugnahme auf die beigefügten Zeichnungen beispielhaft erläutert. Dabei zeigen:

Fig. 1    eine schematische Darstellung des physiologischen und physikalischen Modells eines Brillenglases zusammen mit einem Strahlverlauf in einer vorgegebenen Gebrauchsstellung; und

Fig. 2    eine schematische Darstellung eines Koordinatensystems mit einer ursprünglichen Wellenfront und einer propagierten Wellenfront;

Fig. 3    eine schematische Darstellung einer sphärischen Wellenfront mit einer Vergenzdistanz $s_o$ in einem Abstand d von einer propagierten Wellenfront mit der Vergenzdistanz $s_p$; und

Fig. 4    ein Flussdiagramm zur Veranschaulichung eines Verfahrens zum Optimieren eines individuellen Brillenglases gemäß einem Ausführungsbeispiels der Erfindung.

Anders als in herkömmlichen Optimierungsverfahren, welche auf dem bewährten Modell aus Brillenglas und Refraktionsdefizit des Auges zur Beschreibung und Berechnung der Abbildungsfehler des Systems Brillenglas-Auge basieren, bietet die Erfindung ein Verfahren, welches sich anschaulich anhand eines komplett neuartigen und individuellen Augenmodells beschreiben lässt. So werden im erfindungsgemäßen Ansatz die Wellenfronten erst nach einem Durchgang durch weitere optisch brechenden Flächen bzw. Elemente, die ein individuelles Augenmodell darstellen, ausgewertet. Die Bewertung der Wellenfrontaberrationen und deren Auswirkungen auf das Sehen bei der Abbildung durch das Brillenglas und das Auge erfolgen in diesem individuellen Augenmodell erst nach der letzten Brechung im abbildenden System des erfindungsgemäßen individuellen Augenmodells.

Damit können erstmals bei der Brillenglasoptimierung und -herstellung direkt alle wirksamen Aberrationen einschließlich der Abbildungsfehler höherer Ordnung in der Austrittspupille des Auges berücksichtigt werden. Insbesondere wird in der Erfindung nämlich vorzugsweise bei der Berechung der resultierenden Wellenfront auch der Einfluss der Hornhautvorderfläche und der Augenlinse auf die Abbildungsfehler höherer Ordnung berücksichtigt. Erst bei der Auswertung der resultierenden Wellenfront erfolgt vorzugsweise eine Transformation zu einer sphäro-zylindrischen Kombination, also zu transformierten Abbildungsfehlern 1. und 2. Ordnung, in welche die Abbildungsfehler höherer Ordnung mit einfließen. Bevorzugte Beispiele dieser Transformation zugunsten eines stabilen und schnell konvergierenden Optimierungsprozesses sind weiter oben bereits genannt.

In herkömmlichen Optimierungsverfahren muss eine solche Transformation (also eine entsprechende Auswertung einer Wellenfront) bereits an der Scheitelpunktkugel oder der Eintrittspupille des Auges erfolgen, um eine Zielfunktion in vergleichbar stabiler Weise auswerten zu können. Ein Einfluss der Hornhautvorderfläche und/oder der Augenlinse auf die Abbildungsfehler höherer Ordnung kann damit nicht mehr in gleicher Weise berücksichtigt werden. Im Rahmen der Erfindung wurde aber erkannt, dass gerade dadurch eine wesentliche Verbesserung der individuellen Anpassung eines Brillenglases möglich ist, insbesondere wenn das Auge nicht mehr vernachlässigbare Abbildungsfehler höherer Ordnung aufweist. Aber auch allein schon der Einfluss eines Auges, welches selbst keine großen Abbildungsfehler höherer Ordnung aufweist, auf Wellenfrontaberrationen höherer Ordnung, die von dem herzustellenden Brillenglas verursacht werden, können mit dem erfindungsgemäßen Ansatz erstmals sehr effizient berücksichtigt werden.

In einer bevorzugten Ausführungsform wird für jeden Durchblickspunkt (Bewertungsstelle) die Wellenfrontpropagation entlang eines Hauptstrahles von einem gegebenen Objektpunkt aus durch das Brillenglas, die Augenhornhaut, die Augenvorderkammer und die Augenlinse bis zur Retina bzw. Austrittspupille des Auges berechnet. Im Einzelnen umfasst das Verfahren dabei vorzugsweise folgende Berechungsschritte:

1. Durchrechnung eines Hauptstrahls für einen Durchblickspunkt des Brillenglases, vom Objektpunkt durch den Augendrehpunkt. Dieser Schritt kann analog zu entsprechenden Berechnungen in herkömmlichen Verfahren des Ray-Tracings durchgeführt werden.

2. Aufstellen der vom Objektpunkt ausgehenden sphärischen Wellenfront an der Vorderfläche des Brillenglases. Die Wellenfrontkrümmung entspricht dabei dem Kehrwert des Abstandes des Objektpunktes von der Vorderfläche des Brillenglases. Der Objektpunkt bildet damit den Mittelpunkt der sphärischen Wellenfront.

3. Berechnung der gebrochenen Wellenfront in einer Umgebung des Hauptstrahls nach dem Durchgang durch die Vorderfläche.

4. Berechung der propagierten Wellenfront in einer Umgebung des Hauptstrahls nach dem Durchgang durch das Brillenglas bis zur Rückfläche.

5. Berechnung der gebrochenen Wellenfront in einer Umgebung des Hauptstrahls nach dem Durchgang durch die Rückfläche.

6. Berechung der propagierten Wellenfront in einer Umgebung des Hauptstrahls nach der Propagation von der Brillenglasrückfläche zur Cornea-Vorderfläche (Hornhautvorderfläche.

7. Berechnung der gebrochenen Wellenfront in einer Umgebung des Hauptstrahls nach dem Durchgang durch die Cornea-Vorderfläche.

8. Berechung der propagierten Wellenfront in einer Umgebung des Hauptstrahls nach dem Durchgang durch die Cornea bis zur Cornea-Rückfläche.

9. Berechnung der gebrochenen Wellenfront in einer Umgebung des Hauptstrahls nach dem Durchgang durch die Cornea-Rückfläche. In einer bevorzugten Ausführungsform wird die Cornea-Rückfläche als sphärische Fläche angenommen.

10. Berechung der propagierten Wellenfront in einer Umgebung des Hauptstrahls nach der Propagation bis zur Augenlinse, also in der Augenvorderkammer.

11. Berechnung der gebrochenen Wellenfront in einer Umgebung des Hauptstrahls nach dem Durchgang durch die Augenlinse. In einer bevorzugten Ausführungsform umfasst dieser Schritt wiederum mehrere Teilschritte insbesondere zur Berechnung der Brechung an der Linsen-Vorderfläche, der Propagation in der Augenlinse und der Brechung an der Linsen-Rückfläche.

12. Bewertung der von der Augenlinse austretenden Wellenfront (resultierende Wellenfront). Diese Bewertung erfolgt insbesondere durch eine entsprechende Auswertung einer Zielfunktion.

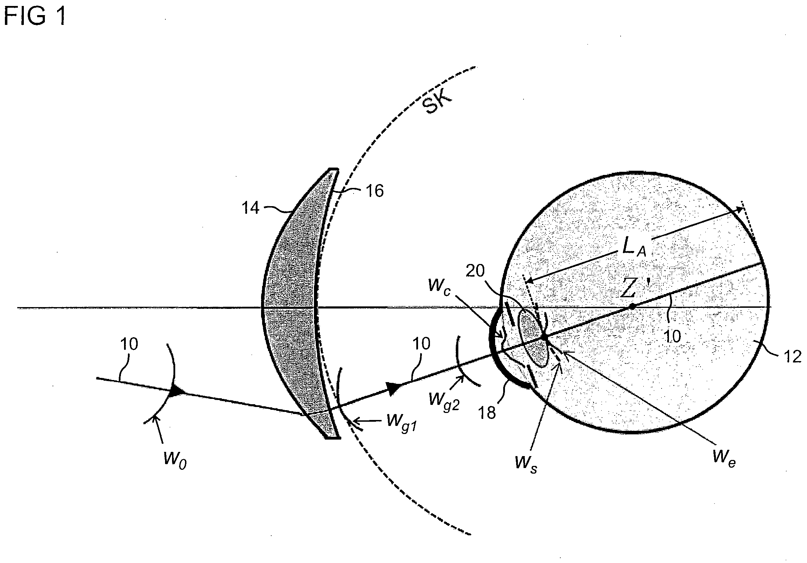

Fig. 1 zeigt eine schematische Darstellung des physiologischen und physikalischen Modells eines Brillenglases in einer vorgegebenen Gebrauchsstellung zusammen mit einem beispielhaften Strahlverlauf, welches einer individuellen Brillenglasberechnung bzw. -optimierung gemäß einer bevorzugten Ausführungsform der Erfindung zugrunde liegt.

Hierbei wird pro Durchblickspunkt des Brillenglases vorzugsweise nur ein einziger Strahl berechnet (der Hauptstrahl 10, der vorzugsweise durch den Augendrehpunkt Z' läuft), begleitend aber außerdem auch die Ableitungen der Pfeilhöhen der Wellenfront nach den transversalen (zum Hauptstrahl senkrechten) Koordinaten. Diese Ableitungen werden bis zur gewünschten Ordnung berücksichtigt, wobei die zweiten Ableitungen die lokalen Krümmungseigenschaften der Wellenfront beschreiben und die höheren Ableitungen mit den Abbildungsfehlern höherer Ordnungen zusammenhängen.

Bei der Durchrechnung von Licht durch das Brillenglas bis in das Auge 12 gemäß dem individuell bereitgestellten Augenmodell werden die lokalen Ableitungen der Wellenfronten im Endeffekt an einer geeigneten Position im Strahlverlauf ermittelt, um sie dort mit einer sphärischen Wellenfront zu vergleichen, deren Krümmungsmittelpunkt auf der Retina des Auges 12 liegt. In einer bevorzugten Ausführungsform ist diese Position beispielsweise die Rückfläche der Augenlinse 20 und/oder die Austrittspupille des Auges 12, welche beispielsweise im Abstand $L_A$ vor der Retina liegt/liegen.

Hierzu wird angenommen, dass eine sphärische Wellenfront $w_0$ vom Objektpunkt ausgeht und bis zur ersten Brillenglasfläche 14 propagiert. Dort wird sie gebrochen und anschließend propagiert sie bis zur zweiten Brillenglasfläche 16, wo sie wieder gebrochen wird. Die vom Brillenglas austretenden Wellenfront $w_{g1}$ propagiert anschließend entlang des Hauptstrahls in Richtung des Auges 12 (propagierte Wellenfront $w_{g2}$) bis sie auf die Cornea 18 trifft, wo sie wiederum gebrochen wird (Wellenfront $w_c$). Nach einer weiteren Propagation innerhalb der Augenvorderkammer bis zur Augenlinse 20, wird die Wellenfront auch von der Augenlinse 20 wiederum gebrochen, wodurch beispielsweise an der Rückfläche der Augenlinse 20 oder an der Austrittspupille des Auges die resultierenden Wellenfront $w_e$ entsteht. Diese wird mit der sphärischen Referenzwellenfront $w_s$ verglichen und die Abweichungen werden für alle Durchblickspunkte in der Zielfunktion (vorzugsweise mit entsprechenden Gewichtungen für die einzelnen Durchblickspunkte) bewertet.

Somit wird die Fehlsichtigkeit nicht mehr nur durch eine dünne sphäro-zylindrische Linse beschrieben, wie dies in herkömmlichen Verfahren üblich war, sondern vorzugsweise werden die Hornhauttopographie, die Augenlinse, die Abstände im Auge und die Deformation der Wellenfront (einschließlich der Abbildungsfehler niedriger Ordnung - also Sphäre, Zylinder und Achselage - sowie vorzugsweise auch einschließlich der Abbildungsfehler höherer Ordnung) im Auge direkt berücksichtigt. Wenn vorhanden (z.B. aus IOL-Mastermessungen) werden die tatsächlichen Abstände im Auge verwendet. Ansonsten kann auf aus der Literatur bekannte Augenmodelle (Gullstrandauge, Indiana Eye Modell, längenfehlsichtiges Auge, ...) zurückgegriffen werden. Beispielhaft wird hier auf Atchinson, Smith "Optics of the Human Eye", Butterworth Heinemann (2000) verwiesen. Dort sind beispielhafte Größen insbesondere bezüglich der Längen (z.B. Abstände zwischen den optischen Elementen, Augenlänge), Flächenbrechwerten, Brechungsindizes, usw., angegeben, die - soweit entsprechende Größen nicht individuell vermessen und im individuellen Augenmodell berücksichtigt werden - für die Vervollständigung des individuellen Augenmodells herangezogen werden können.

Vorzugsweise liefert eine Aberrometermessung die individuellen Wellenfrontdeformationen des realen fehlsichtigen Auges für Ferne und Nähe (Abweichungen, keine absoluten Brechwerte) und die individuellen mesopischen und photopischen Pupillendurchmesser. Aus einer Messung der Hornhauttopographie (flächenhafte Vermessung der Cornea-Vorderfläche) erhält man die individuelle reale Hornhautvorderfläche, die im Allgemeinen nahezu 75% des Gesamtbrechwertes des Auges ausmacht. In einer bevorzugten Ausführungsform ist es nicht notwendig, die Cornea-Rückfläche zu vermessen. Sie wird vorzugsweise wegen des geringen Brechzahlunterschiedes zum Kammerwasser in guter Näherung mit einer Sphäre beschrieben.

Vorzugsweise wird die Augenlinse nicht eigens individuell vermessen. Stattdessen wird die Augenlinse vorzugsweise derart berechnet, dass sich mit den vorgegebenen Abständen im Auge und der gemessenen Hornhauttopographie die gemessenen Wellenfrontaberrationen ergeben. Sie kann dann z.B. als eine homogene Linse mit einer atorischen und einer sphärischen Fläche angesetzt werden. Aber auch in der Literatur diskutierte Modelle mit inhomogenem Aufbau der Augenlinse (Gradient Index Lens) können herbei verwendet werden. Dies wird vorzugsweise zumindest für die Fern- und die Nahmessungen separat durchgeführt und man erhält vorzugsweise durch geeignete, z.B. lineare, Interpolationen ein flexibles Augenmodell für jeden Akkommodationszustand bzw. Objektabstand.

Damit ist man erstmals in der Lage, die Auswirkungen der Wellenfrontdeformationen auf die retinale Abbildungsqualität bei der Brillenglasoptimierung bestmöglich zu berücksichtigen und die Fehler zu minimieren.

Im Folgenden soll nun die Propagation der Wellenfront gemäß einer bevorzugten Ausführungsform der vorliegenden Erfindung näher erläutert werden. Diese Ausführungen sind dabei beispielsweise auf die Propagation der Wellenfront zwischen den beiden Brillenglasflächen 14, 16 und/oder auf die Propagation der Wellenfront von der hinter Brillenglasfläche 16 bis zur Corea-Vorderfläche 18 und/oder auf die Propagation innerhalb der Corea und/oder auf die Propagation zwischen Corea und Augenlinse 20 und/oder auf eine Propagation innerhalb der Augenlinse 20 und/oder auf eine Propagation zwischen Augenlinse 20 und der Retina des Auges 12 anwendbar.

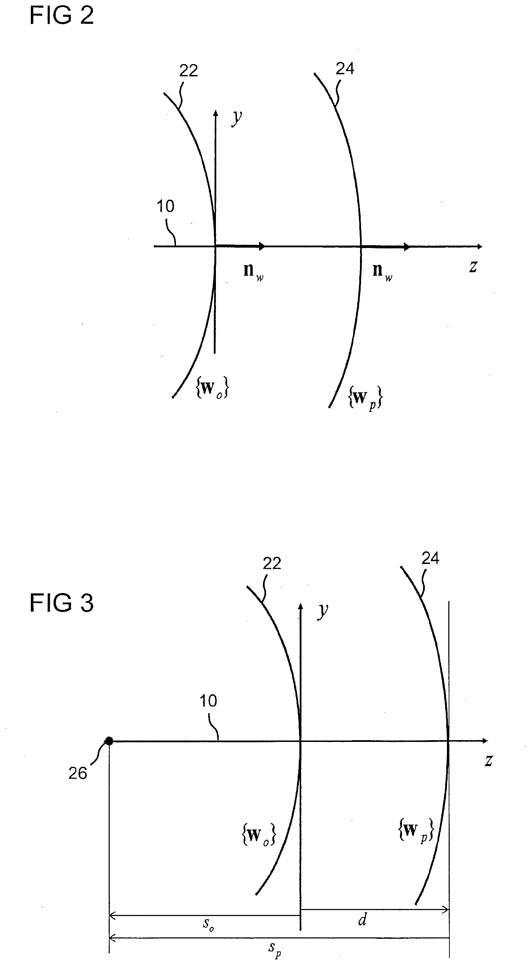

Wie in Fig. 2 dargestellt, wird vorzugsweise ein kartesisches Koordinatensystem (mit einer x-Achse, einer y-Achse und einer z-Achse) definiert, dessen Ursprung bei einem vorgegebenen Hauptstrahl 10 am Schnittpunkt des Hauptstrahls 10 mit der ursprünglichen Wellenfront 22 liegt. Die z-Achse zeigt vorzugsweise in Richtung der des Hauptstrahls 10. Die Richtungen der x-Achse und der y-Achse werden dabei vorzugsweise derart senkrecht zur z-Achse und senkrecht zueinander gewählt, dass das Koordinatensystem rechtshändig ist. Falls bei der ursprünglichen Wellenfront von der Wellenfront an einer brechenden Fläche, also beispielsweise einer Oberfläche 14, 16 des Brillenglases oder der Hornhautvorderfläche 18, ausgegangen wird, wird die x-Achse und/oder die y-Achse vorzugsweise parallel zur Fläche bzw. Flächentangente im Durchstoßpunkt des Hauptstrahls gewählt. In einer anderen bevorzugten Ausführungsform werden die x-Achse und die y-Achse parallel zu den Hauptkrümmungen der ursprünglichen Wellenfront 18 gewählt.

Vorzugsweise wird von einer Beschreibung der Wellenfront gemäß

$$\mathbf{w}(x,y) = \left(x, y, w(x,y)\right) \tag{1}$$

ausgegangen, wobei der Wert *w(x,y)* durch

$$w(x,y) = \sum_{k=0}^{\infty}\sum_{m=0}^{k} \frac{a_{m,k-m}}{m!(k-m)!} x^m y^{k-m} \tag{2}$$

mittels der Koeffizienten

$$a_{m,k-m} = \frac{\partial^k}{\partial x^m \partial y^{k-m}} w(x,y)\Big|_{x=0,y=0} \tag{3}$$

dargestellt wird.

Damit lässt sich der Zusammenhang zwischen den Koeffizienten $a_{kx,ky}$ und den lokalen Aberrationen $E_{kx,ky}$ beschreiben durch:

$$E_{k_x,k_y} = n a_{k_x,k_y} \quad E_{2,0} = S_{xx} = n a_{\text{In},2,0} \quad E_{1,1} = S_{xy} = n a_{1,1} \quad E_{0,2} = S_{yy} = n a_{0,2} \quad E_{3,0} = n a_{3,0}$$

Für Abbildungsfehler bis zur zweiten Ordnung lässt sich die Propagation einer sphärischen Wellenfront mit der Vergenz $S_o = n/s_o$ der ursprünglichen Wellenfront in einer Umgebung um einen Hauptstrahl vorzugsweise in bekannter Weise durch die Propagationsgleichung

$$S_p = \frac{1}{1 - \frac{d}{n}S_o} S_o \tag{4}$$

ausdrücken, wobei $S_p = n\,/\,s_p$ die Vergenz der propagierten Wellenfront bezeichnet.

Wie in Fig. 3 veranschaulicht, bezeichnen dabei $s_o$ und $s_p$ den Scheitelpunktabstand der ursprünglichen Wellenfront 18 bzw. der propagierten Wellenfront 20 (z.B. Abstand entlang des Hauptstrahls 10 von der Wellenfront zum Objektpunkt 26). *n* bezeichnet den Brechungsindex und *d* die Propagationsdistanz.

Durch eine Erweiterung auf drei Dimensionen lässt sich die sphäro-zylindrische Form der Wellenfront wie folgt darstellen. Zunächst werden die Krümmungen $1/s_o$ und $1\,/\,s_p$ mit den zweiten Ableitungen der Pfeilhöhen der ursprünglichen Wellenfront 18 bzw. der propagierten Wellenfront 20 identifiziert. In der dreidimensionalen Darstellung werden die zweiten Ableitungen $w_o^{(2,0)} = \partial^2 w_o\,/\,\partial x^2$, $w_o^{(1,1)} = \partial^2 w_o\,/\,\partial x \partial y$, und $w_o^{(0,2)} = \partial^2 w_o\,/\,\partial y^2$ für die ursprüngliche Wellenfront 18 und entsprechend für die propagierte Wellenfront 20 jeweils in Form einer Vergenzmatrix zusammengefasst:

$$\mathbf{S}_o = \begin{pmatrix} S_{o\,xx} & S_{o\,xy} \\ S_{o\,xy} & S_{o\,yy} \end{pmatrix} = n \begin{pmatrix} w_o^{(2,0)} & w_o^{(1,1)} \\ w_o^{(1,1)} & w_o^{(0,2)} \end{pmatrix}, \qquad \mathbf{S}_p = \begin{pmatrix} S_{p\,xx} & S_{p\,xy} \\ S_{p\,xy} & S_{p\,yy} \end{pmatrix} = n \begin{pmatrix} w_p^{(2,0)} & w_p^{(1,1)} \\ w_p^{(1,1)} & w_p^{(0,2)} \end{pmatrix} \tag{5}$$

Die Komponenten der jeweiligen Vergenzmatrix hängen dabei gemäß

$$S_{oxx} = \left( Sph + \frac{Cyl}{2} \right) - \frac{Cyl}{2} \cos 2\alpha$$

$$S_{oxy} = -\frac{Cyl}{2} \sin 2\alpha \qquad\qquad (6)$$

$$S_{oyy} = \left( Sph + \frac{Cyl}{2} \right) + \frac{Cyl}{2} \cos 2\alpha$$

(und analog für die propagierte Wellenfront) mit den bekannten Größen der sphärischen Wirkung *Sph,* dem Betrag *Cyl* der zylindrischen Wirkung und der Achslage $\alpha$ der zylindrischen Wirkung zusammen. Mittels der Darstellung in Form der Vergenzmatrix lässt sich analog zu Gleichung (4) die Propagation einer astigmatischen Wellenfront über die verallgemeinerte Propagationsgleichung

$$\mathbf{S}_p = \frac{1}{1 - \frac{d}{n}\mathbf{S}_o} \mathbf{S}_o \qquad\qquad (7)$$

mit der Einheitsmatrix $\mathbf{1} = \begin{pmatrix} 1 & 0 \\ 0 & 1 \end{pmatrix}$ darstellen. Äquivalent zu dieser Darstellung in Form der Vergenzmatrix können im dreidimensionalen Vektorraum für die ursprüngliche Wellenfront 22 und die propagierte Wellenfront 24 als Powervektoren eingeführt werden:

$$\mathbf{s}_o = \begin{pmatrix} S_{oxx} \\ S_{oxy} \\ S_{oyy} \end{pmatrix} = n \begin{pmatrix} w_o^{(2,0)} \\ w_o^{(1,1)} \\ w_o^{(0,2)} \end{pmatrix}, \qquad \mathbf{s}_p = \begin{pmatrix} S_{pxx} \\ S_{pxy} \\ S_{pyy} \end{pmatrix} = n \begin{pmatrix} w_p^{(2,0)} \\ w_p^{(1,1)} \\ w_p^{(0,2)} \end{pmatrix} \qquad (8)$$

Für die Berücksichtigung von Abbildungsfehlern höherer Ordnung bei der Propagation der Wellenfront können entsprechende Vektoren $\mathbf{e}_k$ der Dimension $k + 1$ eingeführt werden:

$$\mathbf{e}_{ok} = \begin{pmatrix} E_{ox...xx} \\ E_{ox...xy} \\ \vdots \\ E_{oy...yy} \end{pmatrix} := n \begin{pmatrix} w_o^{(k,0)} \\ w_o^{(k-1,1)} \\ \vdots \\ w_o^{(0,k)} \end{pmatrix}, \qquad \mathbf{e}_{pk} = \begin{pmatrix} E_{px...xx} \\ E_{px...xy} \\ \vdots \\ E_{py...yy} \end{pmatrix} := n \begin{pmatrix} w_p^{(k,0)} \\ w_p^{(k-1,1)} \\ \vdots \\ w_p^{(0,k)} \end{pmatrix} \qquad (9)$$

Es ist allerdings nicht unbedingt notwendig, die Brechung und die Propagation auf Basis einer Beschreibung der Wellenfronten über deren lokale Ableitungen durchzuführen. Alternativ wäre es grundsätzlich auch möglich, beispielsweise lediglich die Brechung mittels einer Beschreibung von Wellenfronten, die Propagation hingegen in herkömmlicher Weise durch eine Strahldurchrechnung vorzunehmen, wie dies beispielsweise in WO 2008/089999 A1 vorgenommen wird. Dort erfolgt die Auswertung der Wellenfront bzw. der Strahldurchrechnung allerdings anders als in der erfindungsgemäßen Vorgehensweise ebenfalls in etablierter herkömmlicher Weise beispielsweise an der Scheitelpunktkugel oder der Eintrittspupille des Auges.

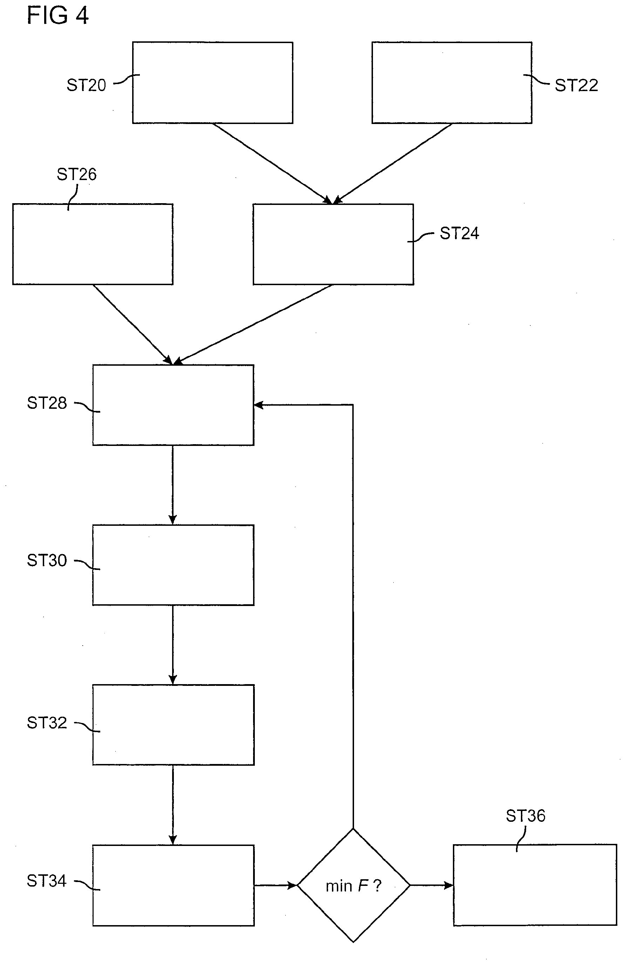

Fig. 4 veranschaulicht ein beispielhaftes Verfahren zum individuellen Optimieren eines Brillenglases. Dabei werden vorzugsweise auch Abbildungsfehler höherer Ordnung (HOA higher order aberrations) sowohl des Brillenglases als auch des Auges berücksichtigt.

Bei einer individuellen Refraktionsbestimmung ST20 für das Auge des Brillenträgers werden vorzugsweise nicht nur subjektiv die Werte für die Sphäre, den Zylinder und die Achslage, insbesondere für die Ferne und Nähe, bestimmt, sondern zusätzlich mit einem Aberrometer die Abbildungsfehler höherer Ordnung, welche beispielsweise durch Zernike-Koeffizienten ( $c_2^0, c_2^2, c_2^{-2}, ...$ ) beschieben werden. Vorzugsweise umfasst das Ermitteln der individuellen Refraktion ST20 außerdem ein Ermitteln einer individuellen Pupillengröße, insbesondere in Abhängigkeit von der Blickrichtung bzw. Objektentfernung.

Außerdem wird in der gezeigten, bevorzugten Ausführungsform die individuelle Topographie der Hornhautvorderfläche des Auges gemessen (ST22). Weitere geometrische Daten des Auges, wie z.B. ein Abstand zwischen der Hornhautvorderfläche und der Augenlinse und/oder ein Abstand der Augenlinse von der Retina und/oder eine Form einer Hornhautrückfläche, werden vorzugsweise als Standardwerte in einer Datenbank hinterlegt, und zur Ermittlung eines individuellen Augenmodells in Schritt ST24 von dort abgerufen. Auch weitere, vorzugsweise individuelle Parameter beispielsweise über die Positionierung des Brillenglases vor dem Auge des Brillenträgers (z.B. Hornhaut-Scheitel-Abstand, Vorneigung, Fassungsscheibenwinkel, usw.) werden bei der Ermittlung eines individuellen Augenmodells zur Festlegung des gesamten optischen Systems aus Brillenglas und Modellauge berücksichtigt.

Zumindest aber wird das individuelle Augenmodelle derart erstellt, dass durch das Zusammenwirken zumindest der Hornhautvorderfläche und der Augenlinse in deren Position relativ zur Retina des Auges die individuell bestimmte Refraktion des Auges bewirkt wird. So wird vorzugsweise aus der individuell ermittelten Refraktion und der individuell ermittelten Topographie der Hornhautvorderfläche die erforderliche Wirkung der Augenlinse berechnet. Falls beispielsweise in der Refraktionsbestimmung ein Astigmatismus des Auges gemessen wird, der (zumindest nicht vollständig) durch die gemessene Topographie der Hornhautvorderfläche bewirkt wird, wird dieser Effekt bei der Ermittlung des individuellen Augenmodells der Augenlinse zugeschrieben.

Um das herzustellende Brillenglas zu berechnen, werden zunächst Startflächen für die Vorder- und Rückfläche des Brillenglases in einer der vorzugsweise individuellen Gebrauchssituation entsprechenden Position vor dem Modellauge vorgegeben (Schritt ST26). Auf Basis dieser Startflächen und dem individuellen Augenmodell erfolgt insbesondere für jede Bewertungsstelle des Brillenglases ein Ermitteln des Verlaufs eines Hauptstrahls, der insbesondere durch den Augendrehpunkt (bei einer der Bewertungsstelle entsprechenden Blickrichtung des Auges) verläuft (Schritt ST28).

Außerdem wird für jede Bewertungsstelle eine auf die Brillenglasvorderfläche auftreffende divergierende, sphärische Wellenfront vorgegeben (Schritt ST30), deren Krümmungsmittelpunkt auf dem Hauptstrahl in einer durch ein vorzugsweise individuell festgelegtes oder ausgewähltes Objektabstandsmodell angegebenen Objektentfernung liegt. Diese sphärische Wellenfront beschreibt somit das von dem entsprechenden Objektpunkt ausgehende Licht.

Die Wellenfront durchläuft nun entlang des jeweiligen Hauptstrahls zumindest die beiden Brillenglasfläche, die Hornhautvorderfläche und die Augenlinse, wobei sie an jeder Grenzfläche gebrochen wird und zwischen den Grenzflächen beispielsweise ungestört propagiert. Nachdem die Grenzflächen und Abstände insbesondere durch das individuelle Augenmodell zumindest teilweise individuell festgelegt sind, wird aus der vorgegebenen sphärischen Wellenfront in Schritt ST32 eine resultierende Wellenfront hinter der Augenlinse ermittelt.

Anschließend erfolgt eine Auswertung der resultierenden Wellenfront (Schritt ST34). Besonders bevorzugt erfolgt dabei auf Basis der individuellen Pupillengröße für die jeweilige Blickrichtung eine Transformation der Koeffizienten der resultierenden Wellenfront (z.B. Zernike-Koeffizienten) zu einer sphäro-zylindrischen Darstellung der resultierenden Abbildungsfehler, d.h. es werden transformierte Werte (auch als "kombinierte Werte") von Sphäre, Zylinder und Achselage ermittelt, die eine gewünschte Anpassung an die resultierende Wellenfront in einer durch die Pupillengröße bestimmten Umgebung des Hauptstrahls darstellen. Es werden bei der Auswertung der resultierenden Wellenfronten die Wellenfrontaberrationen höherer Ordnung also vorzugsweise nicht mehr explizit in einer Zielfunktion berücksichtigt, sondern sie fließen vorzugsweise lediglich indirekt über die Transformation zur sphäro-zylindrischen Kombination in die Zielfunktion ein. Die Auswertung der resultierenden Wellenfront erfolgt dabei insbesondere auf Basis eines Vergleichs mit einer Referenzwellenfront, insbesondere einer entlang des jeweiligen Hauptstrahls bis zur Retina konvergierenden sphärischen Wellenfront.

Falls die Zielfunktion noch nicht ausreichend minimiert ist (und auch ansonsten kein Abbruchkriterium für den Optimierungsvorgang vorliegt), wird die zu optimierende Fläche des Brillenglases variiert und der Vorgang startet wieder bei der Ermittlung des Hauptstrahlverlauf in Schritt ST28 auf Basis der zumindest einen veränderten Fläche (z.B. bei einer unveränderten Vorderfläche und einer veränderten Rückfläche).

Sobald die Zielfunktion in Schritt ST34 ausreichend minimiert ist, können die Brillenglasflächen beispielsweise in Form von Pfeilhöhen ausgegeben und die das Brillenglas entsprechend gefertigt werden (ST36).

**Bezugszeichenliste**

10    Hauptstrahl
12    Auge

14    erste Fläche des Brillenglases (Vorderfläche)
16    zweite Fläche des Brillenglases (Rückfläche)
18    Hornhautvorderfläche
20    Augenlinse
22    ursprüngliche Wellenfront
24    propagierte Wellenfront
26    Objektpunkt

**Patentansprüche**

1.  Computerimplementiertes Verfahren zum Berechnen oder Optimieren eines Brillenglases für zumindest ein Auge eines Brillenträgers zum Zweck der Herstellung des Brillenglases, umfassend die Schritte:

    - Vorgabe eines Objektabstandsmodells $A1(x,y)$ , welches jedem Durchblickspunkt einer Vielzahl von Durchblickspunkten des Brillenglases eine Objektentfernung zuordnet, wobei $A1$ die Objektentfernung und $(x, y)$ der jeweilige Durchblickspunkt des Brillenglases in einer vorgegebenen oder vorgebbaren Blickrichtung bezeichnen;
    - Vorgabe einer Funktion $r_0 = g(A1)$ , welche die Abhängigkeit einer Pupillengröße $r_0$ von der Objektentfernung $A1$ beschreibt;
    - Erfassen von Refraktionsdaten des zumindest einen Auges (12) des Brillenträgers;
    - Festlegen eines individuellen Augenmodells, welches zumindest

      -- die Topographie einer Hornhautvorderfläche (18) des zumindest einen Auges (12),
      -- Position und Wirkung einer Linse (20) des Auges (12) und
      -- eine Retina-Position ($L_A$) des Auges (12)

    derart festlegt, dass das Auge (12) die erfassten Refraktionsdaten aufweist;
    - Vorgeben einer ersten Fläche (14) und einer zweiten Fläche (16) für das zu berechnende bzw. optimierenden Brillenglas;
    - Ermitteln des Verlaufs jeweils eines Hauptstrahls (10) durch jeden Durchblickspunkt ($i$) des zu berechnenden oder optimierenden Brillenglases;
    - Ermitteln einer Pupillengröße für den jeweiligen Hauptstrahl (10) anhand des Objektabstandsmodells $A1(x, y)$ und der vorgegebenen Funktion $r_0 = g(A1)$;
    - Vorgeben jeweils einer auf die erste Fläche (14) des Brillenglases entlang des jeweiligen Hauptstrahls (10) auftreffenden sphärischen Wellenfront ($w_0$), deren Krümmung dem Kehrwert der jeweiligen Objektentfernung gemäß dem Objektabstandsmodell entspricht;
    - Ermitteln einer durch die Wirkung zumindest der ersten und zweiten Fläche des Brillenglases, der Hornhautvorderfläche (18) und der Linse des zumindest einen Auges aus der sphärischen Wellenfront in einer Umgebung des jeweiligen Hauptstrahls resultierenden Wellenfront ($w_e$) in dem zumindest einen Auge, wobei die Umgebung des jeweiligen Hauptstrahls gemäß der jeweils ermittelten Pupillengröße gewählt wird;
    - iteratives Variieren der zumindest einen zu berechnenden oder optimierenden Fläche (14; 16) des Brillenglases bis eine Aberration der resultierenden Wellenfront einer vorgegebenen Sollaberration entspricht.

2.  Verfahren nach Anspruch 1, wobei das Festlegen des individuellen Augenmodells umfasst:

    - Vorgeben einer Vielzahl brechender Flächen, von denen zumindest eine durch einen Satz von Parametern beschrieben wird; und
    - Ermitteln individueller Werte für den Satz von Parametern derart, dass das Auge des Augenmodells die erfassten Refraktionsdaten aufweist.

3.  Verfahren nach Anspruch 1 oder 2, wobei das Erfassen von Refraktionsdaten des zumindest einen Auges ein Messen der Refraktionsdaten mittels Licht einer Messwellenlänge umfasst und wobei das Festlegen des individuellen Augenmodells umfasst:

    - Festlegen einer Wellenlängenabhängigkeit zumindest eines optischen Elements des individuellen Augenmodells; und
    - Ermitteln einer Geometrie des optischen Elements derart, dass das Auge des Augenmodells bei der festgelegten Wellenlängenabhängigkeit und bei der Messwellenlänge die gemessenen Refraktionsdaten aufweist.

4. Verfahren nach einem der vorangegangenen Ansprüche, wobei das Ermitteln eines individuellen Augenmodells umfasst:

- Erfassen individueller topographischer Daten der Hornhautvorderfläche (18) und/oder einer individuellen Retina-Position ($L_A$) des zumindest einen Auges; und
- Ermitteln der Wirkung der Linse (20) des Auges derart, dass das Auge im Augenmodell eine Refraktion gemäß den erfassten Refraktionsdaten des Brillenträgers aufweist.

5. Verfahren nach einem der vorangegangenen Ansprüche, wobei das Ermitteln der resultierenden Wellenfront ($w_e$) mittels Wavefront-Tracing erfolgt.

6. Verfahren nach einem der vorangegangenen Ansprüche, wobei das Ermitteln der resultierenden Wellenfront umfasst:

- Berechnen jeweils einer an der ersten Fläche (14) des Brillenglases gebrochenen Wellenfront für jeden Durchblickspunkt aus der jeweils vorgegebenen sphärischen Wellenfront ($w_0$) und der vorgegebenen ersten Fläche (14);
- Berechnen einer durch das Brillenglas entlang des jeweiligen Hauptstrahls (10) propagierten Wellenfront aus der jeweils berechneten, an der ersten Fläche gebrochenen Wellenfront;
- Berechnen jeweils einer an der zweiten Fläche (16) des Brillenglases gebrochenen Wellenfront ($w_{g1}$) aus der jeweils berechneten, durch das Brillenglas propagierten Wellenfront und der vorgegebenen zweiten Fläche (16);
- Berechnen einer entlang des jeweiligen Hauptstrahls (10) zur Hornhautvorderfläche (18) propagierten Wellenfront ($w_{g2}$) aus der jeweils berechneten, an der zweiten Fläche gebrochenen Wellenfront ($w_{g1}$);
- Berechnen jeweils einer an der Hornhautvorderfläche (18) gebrochenen Wellenfront aus der jeweils berechneten, zur Hornhautvorderfläche propagierten Wellenfront ($w_{g2}$) und der vom individuellen Augenmodell festgelegten Topographie der Hornhautvorderfläche (18);
- Berechnen einer entlang des jeweiligen Hauptstrahls (10) zur Linse (20) propagierten Wellenfront aus der jeweils berechneten, an der Hornhautvorderfläche (18) gebrochenen Wellenfront; und
- Berechnen jeweils einer durch die Linse (20) gebrochenen Wellenfront ($w_e$) aus der jeweils berechneten, zur Linse (20) propagierten Wellenfront und der vom individuellen Augenmodell festgelegten Wirkung der Linse (18).

7. Verfahren nach einem der vorangegangenen Ansprüche, wobei das iterative Variieren der zumindest einen zu berechnenden oder optimierenden Fläche (14; 16) des Brillenglases ein Minimieren einer Zielfunktion umfasst.

8. Verfahren nach einem der vorangegangenen Ansprüche, wobei das Erfassen von Refraktionsdaten ein Erfassen von Daten bezüglich der sphärischen Wirkung $Sph_V$, des Betrags des Astigmatismus $Zyl_V$, der Astigmatismusachse $Achse_V$ sowie zumindest einer weiteren Refraktion höherer Ordnung $HOA_V$ des Auges umfasst, und wobei vorzugsweise das Erfassen von Refraktionsdaten ein Erfassen von ersten Refraktionsdaten für eine erste Objektentfernung und von zweiten Refraktionsdaten für eine zweite Objektentfernung umfasst.

9. Verfahren gemäß einem der vorangegangenen Ansprüche, wobei das zu optimierende Brillenglas ein progressives Brillenglas ist.

10. Vorrichtung zum Berechnen oder Optimieren eines Brillenglases für zumindest ein Auge eines Brillenträgers umfassend:

- Berechnungs- oder Optimierungsmittel, welche ausgelegt sind, das Brillenglas nach einem Verfahren zum Berechnen oder Optimieren eines Brillenglases gemäß einem der Ansprüche 1 bis 9 zu berechnen oder zu optimieren.

11. Computerprogrammerzeugnis, welches ausgelegt ist, wenn geladen und ausgeführt auf einem Computer, ein Verfahren zum Berechnen oder Optimieren eines Brillenglases gemäß einem der Ansprüche 1 bis 9 durchzuführen.

12. Speichermedium mit darauf gespeichertem Computerprogramm, wobei das Computerprogramm ausgelegt ist, wenn geladen und ausgeführt auf einem Computer, ein Verfahren zum Berechnen oder Optimieren eines Brillenglases gemäß einem der Ansprüche 1 bis 9 durchzuführen.

13. Verfahren zum Herstellen eines Brillenglases umfassend:

Berechnen oder Optimieren eines Brillenglases nach dem Verfahren zum Berechnen oder Optimieren eines Brillenglases gemäß einem der Ansprüche 1 bis 9; und
Fertigen des so berechneten oder optimierten Brillenglases.

**14.** Vorrichtung zum Herstellen eines Brillenglases umfassend:

Berechnungs- oder Optimierungsmittel, welche ausgelegt sind, das Brillenglas nach einem Verfahren zum Berechnen oder Optimieren eines Brillenglases gemäß einem der Ansprüche 1 bis 9 zu berechnen oder zu optimieren;
Bearbeitungsmittel, welche ausgelegt sind, das Brillenglas fertig zu bearbeiten.

**Claims**

1. Computer-implemented method for calculating or optimizing a spectacle lens for at least one eye of a spectacle wearer comprising the steps:

   - presetting an object distance model $A1(x, y)$, which assigns an object distance to each viewing point of a plurality of viewing points of the spectacle lens, where $A1$ denotes the object distance and $(x, y)$ denotes the respective viewing point of the spectacle lens in a predetermined or prescribable viewing direction;

   - - prescribing a function $r_0 = g(A1)$ which describes the dependence of a pupil size $r_0$ on the object distance $A1$;

   - acquisition of refraction data of the at least one eye (12) of the spectacle wearer;
   - determination of an individual eye model, which at least

     - the topography of a corneal anterior surface (18) of the at least one eye (12),

       position and effect of a lens (20) of the eye (12), and
       a retinal position ($L_A$) of the eye (12)

   such that the eye (12) has the detected refraction data;
   - presetting a first surface (14) and a second surface (16) for the eyeglass lens to be calculated and optimized, respectively;
   - determining the path of a respective principal ray (10) through each viewing point (i) of the optimizing spectacle lens to be calculated;
   - determining a pupil size for the respective main beam (10) on the basis of the object distance model $A1(x, y)$ and the predetermined function $r_0 = g(A1)$;
   - presetting a spherical wavefront ($w_0$) impinging on the first surface (14) of the spectacle lens along the respective main beam (10), the curvature of which wavefront corresponds to the reciprocal value of the respective object distance according to the object distance model;
   - determining a wavefront ($w_e$) in the at least one eye resulting from the spherical wavefront in a vicinity of the main beam due to the action of at least the first and second surfaces of the spectacle lens, the corneal anterior surface (18) and the lens of the at least one eye, wherein the vicinity of the respective main beam is selected according to the respective determined pupil size;
   - iteratively varying the at least one area (14; 16) of the spectacle lens to be calculated or optimized until an aberration of the resulting wavefront corresponds to a predetermined desired aberration.

2. The method of claim 1, wherein defining the individual eye model comprises:

   - specifying a plurality of refractive surfaces, at least one of which is described by a set of parameters; and
   - determining individual values for the set of parameters such that the eye of the eye model has the acquired refractive data.

3. The method of claim 1 or 2, wherein acquiring refraction data of the at least one eye comprises measuring the refraction data using light of a measurement wavelength, and wherein setting the individual eye model comprises:

- determining a wavelength dependence of at least one optical element of the individual eye model; and
- determining a geometry of the optical element such that the eye of the eye model has the measured refraction data at the determined wavelength dependence and at the measurement wavelength.

4.  The method according to any one of the preceding claims, wherein determining an individual eye model comprises:

- acquiring individual topographic data of the corneal anterior surface (18) and/or an individual retinal position ($L_A$) of the at least one eye; and
- determining the effect of the lens (20) of the eye such that the eye in the eye model has a refraction according to the acquired refraction data of the eyeglass wearer.

5.  The method according to any one of the preceding claims, wherein determining the resulting wavefront ($w_e$) is performed using wavefront tracing.

6.  The method according to any one of the preceding claims, wherein determining the resulting wavefront comprises:

- calculating a wavefront refracted at the first surface (14) of the spectacle lens for each viewing point from the respective predetermined spherical wavefront ($w_0$) and the predetermined first surface (14);
- calculating a wavefront propagated through the spectacle lens along the main beam (10) from the calculated wavefront refracted at the first surface;
- calculating a wavefront ($w_{g1}$) refracted at the second surface (16) of the spectacle lens from the calculated wavefront propagated through the spectacle lens and the predetermined second surface (16);
- calculating a wavefront ($w_{g2}$) propagated along the main beam (10) to the corneal front surface (18) from the calculated wavefront ($w_{g1}$) refracted at the second surface;
- calculating a wavefront refracted at the corneal anterior surface (18) from the respective calculated wavefront ($w_{g2}$) propagated to the corneal anterior surface and the topography of the corneal anterior surface (18) determined by the individual eye model;
- calculating a wavefront propagated along the main beam (10) to the lens (20) from the calculated wavefront refracted at the corneal anterior surface (18); and
- calculating a respective wavefront ($w_e$) refracted by the lens (20) from the respective calculated wavefront propagated to the lens (20) and the effect of the lens (18) determined by the individual eye model.

7.  The method according to any one of the preceding claims, wherein iteratively varying the at least one area (14; 16) of the spectacle lens to be calculated or optimized comprises minimizing an objective function.

8.  The method according to any one of the preceding claims, wherein acquiring refraction data comprises acquiring data relating to the spherical effect $Sph_V$, the amount of astigmatism $Zyl_V$, the astigmatism axis $axis_V$, and at least one further higher order refraction $HOA_V$ of the eye, and
wherein preferably the acquiring of refraction data comprises acquiring first refraction data for a first object distance and second refraction data for a second object distance.

9.  The method according to any one of the preceding claims, wherein the spectacle lens to be optimized is a progressive spectacle lens.

10. Apparatus for calculating or optimizing a spectacle lens for at least one eye of a spectacle wearer comprising:

- calculation or optimization means adapted to calculate or optimize the spectacle lens according to a method for calculating or optimizing a spectacle lens according to any one of claims 1 to 9.

11. Computer program product adapted, when loaded and executed on a computer, to perform a method of calculating or optimizing an ophthalmic lens according to any one of claims 1 to 9.

12. Storage medium having a computer program stored thereon, the computer program being adapted, when loaded and executed on a computer, to perform a method of calculating or optimizing an ophthalmic lens according to any one of claims 1 to 9.

13. A method of manufacturing an ophthalmic lens comprising:

calculating or optimizing an eyeglass lens according to the method of calculating or optimizing an eyeglass lens according to any one of claims 1 to 9; and

manufacturing the spectacle lens thus calculated or optimized.

**14.** Apparatus for manufacturing an ophthalmic lens comprising:

calculating or optimizing means adapted to calculate or optimize the ophthalmic lens according to a method for calculating or optimizing an ophthalmic lens according to any one of claims 1 to 9;

processing means adapted to finish process the spectacle lens.

**Revendications**

**1.** Procédé mis en oeuvre par ordinateur pour calculer ou optimiser un verre de lunettes pour au moins un oeil d'un porteur de lunettes, comprenant les étapes suivantes :

- définition d'un modèle de distance d'objet $A1(x, y)$, qui associe une distance d'objet à chaque point de vision d'une pluralité de points de vision du verre de lunettes, $A1$ désignant la distance d'objet et $(x, y)$ le point de vision respectif du verre de lunettes dans une direction de vision prédéfinie ou pouvant être prédéfinie ;
- définition d'une fonction $r_0 = g(A1)$, qui décrit la dépendance d'une taille de pupille $r_0$ par rapport à la distance de l'objet $A1$;
- saisie de données de réfraction de l'au moins un oeil (12) du porteur de lunettes ;
- définition d'un modèle d'oeil individuel qui comprend au moins

- la topographie d'une surface antérieure de la cornée (18) de l'au moins un oeil (12),
- la position et l'effet d'un cristallin (20) de l'œil (12) et
- une position rétinienne($L_A$) de l'œil (12)

de telle sorte que l'œil (12) présente les données de réfraction détectées ;
- définition d'une première surface (14) et d'une deuxième surface (16) pour le verre de lunettes à calculer ou à optimiser ;
- détermination du parcours d'un rayon principal (10) à travers chaque point de vue (i) du verre de lunettes à calculer et à optimiser ;
- détermination d'une taille de pupille pour le rayon principal respectif (10) à l'aide du modèle de distance d'objet $A1(x, y)$ et de la fonction prédéfinie $r_0 = g(A1)$ ;
- Détermination d'un front d'onde sphérique ($w_0$) incident sur la première surface (14) du verre de lunettes le long du rayon principal respectif (10), dont la courbure correspond à l'inverse de la distance respective de l'objet selon le modèle de distance de l'objet ;
- détermination d'un front d'onde ($w_e$) résultant de l'action d'au moins la première et la deuxième surface du verre de lunettes, de la surface antérieure de la cornée (18) et du cristallin de l'au moins un oeil à partir du front d'onde sphérique dans un environnement du rayon principal dans l'au moins un oeil, l'environnement du rayon principal respectif étant choisi en fonction de la taille de pupille respectivement déterminée ;
- variation itérative de la au moins une surface (14 ; 16) à calculer ou à optimiser du verre de lunettes jusqu'à ce qu'une aberration du front d'onde résultant corresponde à une aberration de consigne prédéfinie.

**2.** Le procédé selon la revendication 1, dans lequel la définition du modèle oculaire individuel comprend :

- la définition d'une pluralité de surfaces réfringentes, dont au moins une est décrite par un ensemble de paramètres ; et
- déterminer des valeurs individuelles pour l'ensemble de paramètres de telle sorte que l'oeil du modèle d'oeil présente les données de réfraction détectées.

**3.** Le procédé selon la revendication 1 ou 2, dans lequel l'acquisition de données de réfraction du au moins un oeil comprend la mesure des données de réfraction au moyen de lumière d'une longueur d'onde de mesure et dans lequel la détermination du modèle d'oeil individuel comprend :

- déterminer une dépendance à la longueur d'onde d'au moins un élément optique du modèle oculaire individuel ; et

- déterminer une géométrie de l'élément optique de telle sorte que l'oeil du modèle d'oeil présente les données de réfraction mesurées à la dépendance de longueur d'onde déterminée et à la longueur d'onde de mesure.

4. Le procédé selon l'une quelconque des revendications précédentes, dans lequel la détermination d'un modèle oculaire individuel comprend :

- l'acquisition de données topographiques individuelles de la surface antérieure de la cornée (18) et/ou d'une position rétinienne individuelle ($L_A$) de l'au moins un oeil ; et
- détermination de l'effet du cristallin (20) de l'oeil de telle sorte que l'oeil dans le modèle d'oeil présente une réfraction conforme aux données de réfraction saisies du porteur de lunettes.

5. Le procédé selon l'une des revendications précédentes, dans lequel la détermination du front d'onde résultant ($w_e$) s'effectue au moyen d'un traçage de front d'onde.

6. Le procédé selon l'une quelconque des revendications précédentes, dans lequel la détermination du front d'onde résultant comprend :

- calculer un front d'onde réfracté sur la première surface (14) du verre de lunettes pour chaque point de vue à partir du front d'onde sphérique ($w_0$) respectivement prédéfini et de la première surface (14) prédéfinie ;
- calculer un front d'onde propagé à travers le verre de lunettes le long du rayon principal (10) à partir du front d'onde calculé et réfracté sur la première surface ;
- calculer un front d'onde ($w_{g1}$) réfracté sur la deuxième surface (16) du verre de lunettes à partir du front d'onde calculé propagé à travers le verre de lunettes et de la deuxième surface (16) prédéfinie ;
- calculer un front d'onde ($w_{g2}$) propagé le long du rayon principal (10) vers la surface avant de la cornée (18) à partir du front d'onde ($w_{g1}$) calculé et réfracté sur la deuxième surface ;
- calculer un front d'onde réfracté sur la surface antérieure de la cornée (18) à partir du front d'onde ($w_{g2}$) calculé respectif propagé vers la surface antérieure de la cornée et de la topographie de la surface antérieure de la cornée (18) déterminée par le modèle oculaire individuel ;
- calculer un front d'onde propagé le long du faisceau principal (10) vers la lentille (20) à partir du front d'onde calculé réfracté à la surface antérieure de la cornée (18) ; et
- calculer respectivement un front d'onde ($w_e$) réfracté par la lentille (20) à partir du front d'onde calculé respectif propagé vers la lentille (20) et de l'effet de la lentille (18) déterminé par le modèle oculaire individuel.

7. Le procédé selon l'une quelconque des revendications précédentes, dans lequel la variation itérative de la au moins une surface (14 ; 16) à calculer ou à optimiser du verre de lunettes comprend une minimisation d'une fonction cible.

8. Le procédé selon l'une quelconque des revendications précédentes, dans lequel l'acquisition de données de réfraction comprend une acquisition de données concernant l'effet sphérique $Sph_V$, la quantité d'astigmatisme $Zyl_V$, l'axe d'astigmatisme $axe_V$ et au moins une autre réfraction d'ordre supérieur $HOA_V$ de l'œil et

9. Le procédé selon l'une quelconque des revendications précédentes, dans lequel le verre de lunettes à optimiser est un verre de lunettes progressif.

10. Dispositif de calcul ou d'optimisation d'un verre de lunettes pour au moins un oeil d'un porteur de lunettes, comprenant :

- des moyens de calcul ou d'optimisation configurés pour calculer ou optimiser le verre de lunettes selon un procédé de calcul ou d'optimisation d'un verre de lunettes selon l'une quelconque des revendications 1 à 9.

11. Produit de programme informatique qui, lorsqu'il est chargé et exécuté sur un ordinateur, est adapté pour mettre en oeuvre un procédé de calcul ou d'optimisation d'un verre de lunettes selon l'une quelconque des revendications 1 à 9.

12. Support de stockage sur lequel est stocké un programme d'ordinateur, ledit programme d'ordinateur étant adapté, lorsqu'il est chargé et exécuté sur un ordinateur, pour mettre en oeuvre un procédé de calcul ou d'optimisation d'un verre de lunettes selon l'une quelconque des revendications 1 à 9.

13. Procédé de fabrication d'un verre de lunettes comprenant :

calculer ou optimiser un verre de lunettes selon le procédé de calcul ou d'optimisation d'un verre de lunettes selon l'une quelconque des revendications 1 à 9 ; et
fabriquer le verre de lunettes ainsi calculé ou optimisé.

14. Dispositif de fabrication d'un verre de lunettes comprenant :

des moyens de calcul ou d'optimisation adaptés pour calculer ou optimiser le verre de lunettes selon un procédé de calcul ou d'optimisation d'un verre de lunettes selon l'une quelconque des revendications 1 à 9 ;
des moyens de traitement adaptés pour terminer le traitement du verre de lunettes.

FIG 1

EP 2 802 935 B1

FIG 2

FIG 3

## FIG 4

ST20

ST22

ST26

ST24

ST28

ST30

ST32

ST34 → min *F* ? → ST36

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10313275
- WO 2008089999 A1

- US 20030107706 A1

**In der Beschreibung aufgeführte Nicht-Patentliteratur**

- **DR. ROLAND ENDERS.** Die Optik des Auges und der Sehhilfen. *Optische Fachveröffentlichung GmbH, Heidelberg,* 1995, 25
- **DIEPES, BLENDOWSKE.** Optik und Technik der Brille. *Optische Fachveröffentlichung GmbH, Heidelberg,* 2002, 47
- **G. ESSER ; W. BECKEN ; W. MÜLLER ; P. BAUMBACH ; J. ARASA ; D. UTTENWEILER.** Derivation of the refraction equations for higher order aberrations of local wavefronts at oblique incidence. *JOSAA,* 2010, vol. 27 (2

- **G. ESSER ; W. BECKEN ; W. MÜLLER ; P. BAUMBACH ; J. ARASA ; D. UTTENWEILER.** Derivation of the propagation equations for higher order aberrations of local wavefronts. *JOSAA,* 2011, vol. 28 (11
- **BENNETT ; RABBETTS.** Clinical Visual Optics. *Butterworth Heinemann,* 2007
- **ABSCHNITT.** *Chromatic aberrations*
- **VERÖFFENTLICHUNG VON D.A.ATCHISON ; G. SMITH.** Chromatic dispersions of the ocular media of human eyes. *J. Opt. Soc. Am. A,* vol. 22 (1
- **JASON PORTER et al.** Adaptive Optics for Vision Science. Wiley, 2006, 522
- **SMITH.** Optics of the Human Eye. Butterworth Heinemann, 2000